(19) Europäisches Patentamt
European Patent Office
Office européen des brevets

(11) **EP 3 240 964 B1**

(12) **FASCICULE DE BREVET EUROPEEN**

(45) Date de publication et mention de la délivrance du brevet:
**02.12.2020 Bulletin 2020/49**

(21) Numéro de dépôt: **15830787.6**

(22) Date de dépôt: **29.12.2015**

(51) Int Cl.:
***F16D 65/18*** *(2006.01)*

(86) Numéro de dépôt international:
**PCT/EP2015/081378**

(87) Numéro de publication internationale:
**WO 2016/107885 (07.07.2016 Gazette 2016/27)**

(54) **ACTIONNEUR DE FREIN A REDUCTION DIFFERENTIELLE, FREIN OU ETRIER DE FREIN INCLUANT UN TEL ACTIONNEUR, ET PROCEDE DE DESSERRAGE D'UN TEL FREIN**

BREMSAKTUATOR MIT DIFFERENTIELLER VERRINGERUNG, BREMSE ODER BREMSSATTEL MIT SOLCH EINEM AKTUATOR UND VERFAHREN ZUR FREIGABE SOLCH EINER BREMSE

DIFFERENTIAL REDUCTION BRAKE ACTUATOR, BRAKE OR BRAKE CALIPER INCLUDING SUCH AN ACTUATOR, AND METHOD FOR RELEASING SUCH A BRAKE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.12.2014 FR 1463383**
**29.12.2014 FR 1463388**

(43) Date de publication de la demande:
**08.11.2017 Bulletin 2017/45**

(73) Titulaire: **Foundation Brakes France**
**93700 Drancy (FR)**

(72) Inventeurs:
• **PASQUET, Thierry**
**94700 Vincennes (FR)**
• **FOURNET, Paul**
**95410 Groslay (FR)**
• **BOURLON, Philippe**
**77230 Dammartin en Goele (FR)**
• **CUBIZOLLES, Cyril**
**93700 Drancy (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
**EP-A1- 0 139 116     DE-U1-202005 015 404**
**US-A- 4 804 073**

**Description**

L'invention se rapporte à un actionneur linéaire pour activer un frein de véhicule, notamment pour un étrier de frein à disque mais possiblement pour un frein à tambour. Cet actionneur comprend un piston de frein est déplacé en translation par un mécanisme vis-écrou animé par un réducteur à partir d'un moteur électrique.

Cet actionneur comprend un étage de réduction amont par train épicycloïdal à couronne fixe, entraîné en entrée par son planétaire. Il entraîne l'entrée d'un réducteur épicycloïdal appelé "différentiel", comprenant deux trains épicycloïdaux partageant un élément cinématique commun. Le porte-satellites amont porte le planétaire d'entrée d'un réducteur épicycloïdal différentiel.

Dans une première famille, ces deux trains comprennent un porte-satellites commun et des satellites communs, qui engrènent à la fois sur une couronne fixe et sur une couronne mobile. A partir de cette couronne fixe, les satellites du réducteur différentiel entraînent une couronne mobile. Celle-ci est entourée par un filetage, qui coopère avec un filetage intérieur du piston pour entraîner le piston en translation.

De préférence, la couronne fixe est commune aux train amont et au réducteur différentiel, épicycloïdaux et les satellites différentiels sont communs aux deux couronnes.

En deuxième famille, les deux trains sont en série avec entrée par le planétaire et couronne fixe en rotation. Le deuxième porte-satellite constitue un élément portant un filetage extérieur, qui coopère avec la même denture que leurs satellites. Cette denture est portés par l'intérieur du piston, et présente deux motifs croisés capables de remplir les deux fonctions en une même position longitudinale de la denture.

L'invention propose en outre un procédé de fabrication d'un actionneur avec son piston obtenu par matriçage puis enroulement d'une plaque, laquelle est noyée dans un matériau durcissable pour former l'extérieur du piston.

L'invention se rapporte aussi à un frein incluant un tel actionneur, notamment un étrier de frein à disque, ainsi qu'un procédé de commande et un véhicule mettant en œuvre un tel frein ou actionneur.

**Etat de la technique**

Le domaine de l'invention est celui des freins de véhicules routiers, en particulier des véhicules automobiles légers et utilitaires, et notamment à quatre roues.

Dans un tel véhicule, la fonction de frein de service consiste principalement à ralentir le véhicule et obtenir son arrêt. Dans la plupart des automobiles actuelles, le frein de service est assuré par des freins à tambour ou des freins à disque, ou à disques à l'avant du véhicule et à tambours à l'arrière à véhicule.

La fonction de frein de stationnement consiste à maintenir un véhicule immobilisé de façon continue pendant de longues durées. La fonction de frein de secours consiste à ralentir un véhicule en mouvement de façon exceptionnelle, par exemple en cas de défaillance du circuit de commande du frein de service. Très souvent, ce fonctionnement est réalisé par le même mécanisme que le frein de stationnement, et le plus souvent uniquement sur les freins arrière.

Depuis longtemps, les freins sont en général actionnés par une pression hydraulique pour les freins de service, et pour les freins de stationnement par traction d'un câble en général à l'aide d'un levier à cliquet.

Depuis une dizaine d'années, il est devenu courant de prévoir un système automatisé de gestion du frein de stationnement, par un calculateur qui commande un actionneur électrique. L'actionneur électrique est souvent situé à l'extérieur du frein lui-même, et fonctionne par exemple en exerçant une traction sur un câble en lieu et place de la commande manuelle. Une telle gestion extérieure présente différents inconvénients, par exemple complexité et coût de fabrication et de maintenance.

Dans le même temps, il est recherché aussi de réaliser des freins à fonctionnement purement électrique, c'est à dire y compris la fonction de frein de service.

Ainsi, il est intéressant de réaliser un frein dont le ou les actionneurs électriques soient entièrement compris dans le mécanisme de base du frein ou "base de freinage", "foundation brake" en Anglais, c'est à dire la partie qui est directement située sur ou autour de la roue.

Qu'il s'agisse de freins à disque ou de freins à tambour, a cinématique de ces mécanismes utilise un déplacement assez faible mais nécessite un effort de serrage assez important. Pour cette raison, les motorisations électriques sont souvent choisies à vitesse de rotation élevée, ce qui permet de limiter leur taille et leur poids pour une puissance donnée, mais oblige à prévoir une très grande démultiplication.

Pour les freins à tambour, par exemple, le document FR 13 63706 (non encore publié) propose ainsi un actionneur électrique séparé du cylindre hydraulique. Cet actionneur électrique applique un effort linéaire par un mécanisme vis-écrou entraîné par une transmission de trois pignons extérieurs, elle-même entraînée par un motoréducteur à deux trains épicycloïdaux en série.

Pour les freins à disque, par exemple, le document US 4 804 073 propose un étrier de frein dont le boîtier reçoit un actionneur électrique comprenant un mécanisme vis-écrou situé à l'intérieur du piston hydraulique, entraîné coaxialement par un réducteur épicycloïdal différentiel à double couronne, lui-même entraîné par un moteur. Comme illustré ici en FIGURE 1, en référence à la fig.1 de ce document, le moteur 9M entraîne un pignon planétaire 9S qui engrène avec les satellites 9P d'un porte-satellites 9PC disposé à l'intérieur d'une couronne fixe 9R1, entraînant ainsi une rotation de ce porte-satellites 9PC selon une première réduction. Les satellites 9P engrènent aussi avec une couronne mobile 9R2, qui est ainsi entraînée selon une deuxième réduction. Cette couronne mobile est accouplée en rotation avec la tête d'une vis 9SC qui pénètre à l'intérieur de la chambre hydraulique, et coopère avec un écrou 9NU maintenu fixe en rotation. Lorsqu'il est déplacé en translation par la rotation de la vis, cet écrou 9NU appuie sur le piston 9PL, lequel exerce ainsi son effort de serrage sur la plaque arrière 17 d'une garniture de frottement. Dans sa fig.1, ce document propose d'entraîner le réducteur directement par un moteur électrique 9M.

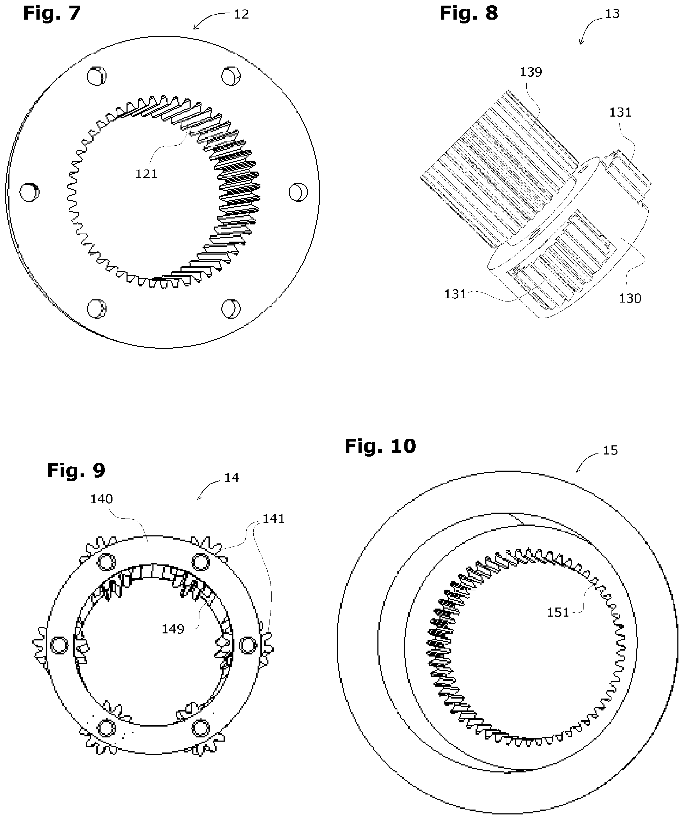

Cependant, la réduction de l'ordre de 1/115 fournie par un tel réducteur peut être insuffisante, en particulier pour fournir des efforts importants, et/ou impose une taille de moteur qui devient gênante sur le plan de l'encombrement. A cet effet, par exemple dans la fig.9 du même document, il a été proposé de réaliser un ensemble motoréducteur comprenant un étage supplémentaire de pignons extérieurs, dont le moteur est monté sur le côté du piston avec un arbre sortant du côté opposé à celui du piston.

Indépendamment de ce document, comme illustré ici en FIGURE 2 avec un ensemble 9MGU d'axe moteur 9AM, une telle configuration présente encore des contraintes d'encombrement, et potentiellement un poids supérieur

Le document DE 20 2005 015404 U1 décrit un actionneur linéaire, notamment pour étrier de frein à disque comprenant un réducteur épicycloïdal.

Un but de l'invention est de pallier les inconvénients de l'état de la technique, et en particulier de fournir un actionneur électrique produisant un meilleur compromis entre une grande réduction et un faible poids et encombrement, pour tous types de frein et en particulier pour les freins à disque, uniquement électriques ou mixtes hydrauliques.

Cet objectif est recherché conjointement avec des avantages en matière de simplicité, coût et fiabilité, de fabrication et d'entretien.

### Exposé de l'invention

L'invention propose un actionneur linéaire pour activer un frein de véhicule, en particulier routier et/ou automobile, notamment pour un étrier de frein à disque. Cet actionneur est du type comprenant un piston de frein qui est déplacé en translation par un mécanisme comprenant un mécanisme vis-écrou transformant un entraînement rotatif en déplacement linéaire, lequel est animé par un mécanisme de réduction (appelé aussi démultiplication) à partir d'un moteur électrique.

Selon l'invention, cet actionneur est du type comprenant :

- un réducteur épicycloïdal différentiel (DPR) comprenant au moins deux étages épicycloïdaux partageant entre eux un élément commun, c'est-à-dire l'un des élément parmi les suivants : planétaire, satellites, porte-satellites, et couronne. Dans ce réducteur épicycloïdal différentiel :

    o un premier étage épicycloïdal comprend un groupe de satellites d'entrée, entraînés en entrée par engrènement avec un pignon planétaire d'entrée et qui engrènent avec une couronne fixe en rotation, entraînant un porte-satellites d'entrée avec une première réduction, et
    o un deuxième étage épicycloïdal comprend un groupe de satellites de sortie portés par un porte-satellites de sortie et qui engrènent avec une couronne, pour fournir une deuxième réduction ;

- un mécanisme vis-écrou entraîné en rotation par la sortie dudit réducteur différentiel pour déplacer un piston mobile en translation selon l'axe dudit train épicycloïdal différentiel, dans le sens du serrage.

Selon l'invention, cet actionneur est caractérisé en ce que :

- il comprend en outre un étage amont de réduction entraînant le réducteur différentiel par un train épicycloïdal amont comprenant un porte-satellites amont solidaire en rotation du pignon d'entrée planétaire dudit réducteur différentiel, ledit porte-satellites amont portant un groupe de satellites amont qui :

    ◦ engrènent avec une couronne fixe, et
    ◦ sont entraînés en entrée par engrènement avec un pignon planétaire amont ; et

- la sortie du réducteur différentiel entraîne en rotation une vis qui coopère avec un écrou fixe en rotation qui est formé à l'intérieur d'une pièce solidaire du piston ou à l'intérieur du piston lui-même.

Ainsi qu'on le comprend, l'invention combine un choix d'étages de réduction fournissant une réduction globale importante, avec une disposition géométrique imbriquée, radialement et axialement, qui permet une grande compacité. En particulier, même si le taux de réduction global pourrait être obtenu par une simple accumulation basique d'étages de réduction connus, la combinaison selon l'invention présente une imbrication particulière des différents étages entre eux, qui permet d'obtenir un meilleur compromis entre compacité, poids, taux de réduction et capacité de charge transmise. Ce gain de performance est d'autant plus utile du fait que les éléments de la base de freinage font partie d'un sous-ensemble non suspendu, et dont le déplacement vis-à-vis du châssis du véhicule augmente l'impact en encombrement.

Ces performances sont obtenues pour de nombreux types de freins, y compris des types voire des modèles de frein déjà commercialisés, en particulier hydrauliques ou mixtes hydrauliques/électriques. Elles sont donc plus faciles à obtenir avec une bonne fiabilité et au prix de moindres efforts et coûts d'adaptation, à la conception voire à l'assemblage ou même en deuxième monte.

Bien que présentée ici dans le cadre d'un frein à disque, l'invention s'applique aussi à d'autres types de frein utilisant un actionneur linéaire, par exemple un frein à tambour pour appuyer sur une ou plusieurs extrémités de segments, en frein de service et/ou en frein de stationnement.

## Première famille de modes de réalisation

Dans une première famille de modes de réalisation, l'actionneur présente un porte-satellites d'entrée qui est confondu ou solidaire en rotation avec le porte-satellites de sortie, formant ainsi un élément commun au premier et au deuxième étages dudit réducteur épicycloïdal différentiel. De préférence, il porte un même groupe de satellites qui forment à la fois le groupe de satellites d'entrée et le groupe de satellites de sortie.

En outre, les satellites de sortie du deuxième étage dudit réducteur épicycloïdal différentiel engrènent avec une couronne mobile laquelle est ainsi entraînée en rotation pour fournir une deuxième réduction, qui est déterminée par le ratio entre le rayon fois le nombre de dents de la couronne mobile et le rayon fois le nombre de dents de la couronne fixe

Dans cet actionneur, la couronne mobile du réducteur différentiel entraîne alors en rotation une vis formée dans une pièce entourant la denture de ladite couronne mobile et solidaire de ladite couronne mobile ; laquelle vis coopère avec un écrou fixe en rotation qui est formé à l'intérieur d'une pièce solidaire du piston ou du piston lui-même

Dans cette première famille de modes de réalisation, on comprend que la réduction harmonique produite, entre les deux couronnes du réducteur différentiel, fournit un taux de réduction particulièrement important, ce qui permet par exemple de gagner en compacité et en effort appliqué tout en limitant la puissance demandée au moteur.

Dans un mode de réalisation préféré de cette première famille de modes de réalisation, cet actionneur comprend un étage de réduction dit amont formé par un train épicycloïdal amont entraîné par le moteur électrique. Cet étage de réduction amont entraîne un réducteur épicycloïdal différentiel à double couronne. La couronne mobile de ce réducteur épicycloïdal différentiel est entourée par un filetage qu'elle entraîne en rotation. Ce filetage entoure la denture de la couronne mobile, et coopère avec un filetage intérieur du piston pour l'entraîner en translation.

Une description plus précise en est la suivante.

- L'étage de réduction amont, qui entraîne le réducteur différentiel, est formé par un train épicycloïdal amont comprenant en sortie un porte-satellites amont solidaire en rotation du pignon d'entrée planétaire dudit réducteur différentiel, monopièce avec lui ou de préférence emmanché dans à l'intérieur. Ce porte-satellites amont porte un groupe de satellites amont qui :

  ◦ engrènent avec une couronne fixe dite amont, solidaire du boîtier d'actionneur ou d'étrier, possiblement fixée à ou monopièce avec lui, et
  ◦ sont entraînés en entrée par engrènement avec un pignon planétaire amont, produisant ainsi une réduction dite amont.

- Le réducteur épicycloïdal différentiel comprend un porte-satellites dit différentiel portant :

  ◦ un groupe de satellites dit d'entrée, qui sont entraînés en entrée par engrènement avec le pignon planétaire différentiel d'entrée, et qui engrènent avec une couronne fixe différentielle, entraînant ainsi ledit porte-satellites différentiel avec une première réduction fonctionnant selon le même principe que la réduction amont, et
  ◦ un groupe de satellites de sortie, solidaires en rotation avec les satellites d'entrée, et qui engrènent avec une couronne mobile différentielle, laquelle est ainsi entraînée en rotation pour fournir une deuxième réduction pouvant être appelé "harmonique". Cette deuxième réduction est déterminée en particulier par le ratio entre le rayon fois le nombre de dents de la couronne mobile et le rayon fois le nombre de dents de la couronne fixe.

- Le mécanisme vis-écrou est entraîné en rotation par la couronne mobile dudit réducteur différentiel, de façon à déplacer le piston en translation selon l'axe dudit train épicycloïdal différentiel, dans le sens du serrage, et optionnellement dans les deux sens.
- La vis du mécanisme vis-écrou est formée dans une pièce entourant la denture de ladite couronne mobile et solidaire de ladite couronne mobile. Cette vis coopère avec un écrou fixe en rotation qui est formé à l'intérieur d'une pièce solidaire en translation du piston.

Dans cette famille, l'invention présente de préférence les particularités suivantes, qui peuvent ou non être combinées entre elles selon les besoins et contraintes qui président au dimensionnement de l'actionneur et/ou du frein.

De préférence, la couronne fixe du train épicycloïdal amont est monopièce avec la couronne fixe du réducteur différentiel, voire à denture commune et continue et de diamètre constant. On obtient par exemple une plus grande compacité et simplicité de réalisation.

Selon d'autres variantes, la couronne fixe du train épicycloïdal amont et la couronne fixe du réducteur différentiel présentent des diamètres différents et/ou des nombres de dents différents, tout en étant possiblement formées par une même pièce. On obtient ainsi plus de souplesse et de liberté dans la détermination des paramètres de réduction et de charge de l'actionneur

Dans un mode de réalisation préféré, le porte-satellites différentiel porte un unique groupe de satellites dit différentiels, de préférence monopièces, qui présentent chacun une denture uniforme et continue et de diamètre constant sur deux parties longitudinales successives de façon à former chacun à la fois un satellite d'entrée et un satellite de sortie.

Ce mode de réalisation préféré permet par exemple une plus grande compacité et simplicité de réalisation.

Dans d'autres modes de réalisation, les satellites différentiels présentent deux diamètres différents sur leurs deux parties engrenant avec les deux couronnes, ou des nombres de dents différents, ou les deux à la fois. On obtient ainsi plus de souplesse et de liberté dans la détermination des paramètres de réduction et de charge de l'actionneur.

Dans ce même mode de réalisation préféré, le filetage de la vis et la denture de la couronne mobile sont formés dans la même pièce.

De préférence, le filetage de l'écrou est formé dans un alésage formé à l'intérieur du piston.

Ainsi, dans le mode de réalisation préféré, c'est la couronne mobile elle-même qui forme la vis, laquelle est entourée par le piston formant lui-même écrou.

De façon préférée, l'actionneur présente des dimensions déterminées pour que le filetage utile de la vis entoure en tout ou partie la denture de la couronne fixe, ce qui permet par exemple simplicité de fabrication et compacité. D'autres variantes sont cependant prévues, qui permettent plus de liberté dans le dimensionnement de l'actionneur, et par exemple une souplesse d'intégration dans l'étrier par le choix de ses dimensions externes telles que son allongement ou son diamètre ou du rapport entre elles.

**Deuxième famille de modes de réalisation**

Dans une deuxième famille de modes de réalisation, le premier et le deuxième étage épicycloïdaux du réducteur différentiel sont montés en série, fonctionnant avec une couronne fixe en rotation, de préférence la même pour les deux.

Dans cette actionneur, les satellites de sortie du deuxième étage épicycloïdal dudit réducteur épicycloïdal différentiel engrènent avec une couronne fixe en rotation, dont la denture est formée selon une première orientation sur la surface intérieure du piston, lequel forme un cylindre de révolution coaxial audit deuxième étage épicycloïdal.

En outre, la sortie dudit deuxième étage épicycloïdal entraîne en sortie un élément fileté qui lui est coaxial et porte sur sa surface extérieure un filetage coopérant avec un filetage formé sur la même surface intérieure dudit piston selon une deuxième orientation distincte de la première orientation, entraînant ainsi ledit piston en translation selon son axe par rapport au châssis de l'actionneur.

Ce châssis est par exemple un boîtier spécifique à l'actionneur, ou est formé directement par le boîtier de l'étrier dans lequel l'actionneur est réalisé.

En utilisant une telle denture croisée, il devient possible d'utiliser la même surface intérieure pour produire plusieurs fonctions : à la fois en tant que couronne d'un ou plusieurs train épicycloïdaux, et filetage femelle pour le mécanisme vis-écrou. Cette combinaison de fonction permet par exemple de limiter l'encombrement radial, tout en utilisant toute la longueur de l'alésage interne du piston lors de sa course de déplacement en translation. En effet, la même partie du piston peut, selon la position du piston sur sa translation, coopérer indifféremment avec l'élément fileté du mécanisme vis-écrou ou avec les satellites de l'un ou l'autre des trains épicycloïdaux.

Dans un mode de réalisation préféré de cette deuxième famille de modes de réalisation, Ainsi, selon encore un autre aspect de l'invention, possiblement mais non obligatoirement conforme avec les précédents, il est proposé un actionneur linéaire de frein de véhicule, notamment pour étrier de frein à disque, du type fournissant un effort de serrage par déplacement d'un piston par un mécanisme vis-écrou entraîné en rotation par un réducteur.

Selon cet aspect possiblement indépendant du mode de fabrication, cet actionneur comprend au moins un train épicycloïdal comprenant un porte-satellites portant un groupe de satellites engrenant d'une part avec un pignon planétaire et d'autre part avec une couronne comprenant une denture formée selon une première orientation sur la surface intérieure d'un piston formant un cylindre de révolution coaxial audit train épicycloïdal.

En outre, ce train épicycloïdal entraîne en sortie un élément fileté qui lui est coaxial et porte sur sa surface extérieure un filetage coopérant avec un filetage formé sur la même surface intérieure dudit piston selon une deuxième orientation distincte de la première orientation, entraînant ainsi ledit piston en translation par rapport audit piston selon son axe.

Par cette configuration, on obtient ainsi une diminution de l'encombrement radial par confusion de la couronne et de la vis, et longitudinal par recouvrement de la totalité des trains épicycloïdaux par le piston lors de sa rétraction, tout en permettant une grande démultiplication combiné avec un faible nombre de pièces et une simplicité du mécanisme à la fabrication comme à l'utilisation.

Selon une particularité, un tel actionneur comprend au moins un premier et un deuxième trains épicycloïdaux montés en série, chacun entraîné en entrée par son pignon planétaire et fournissant une réduction en sortie par son porte-satellite, et dont les satellites engrènent selon la première orientation avec la même denture du piston, par exemple une denture droite c'est à dire longitudinale. Ce piston, fixé par ailleurs en rotation, est déplacé en translation longitudinale par une coopération de cette même denture intérieure, mais selon la deuxième orientation, avec un élément fileté entraîné en rotation par le porte-satellites du deuxième train épicycloïdal. Par exemple, ce filetage mâle peut être formé directement dans la surface extérieure de ce deuxième porte-satellites. On obtient ainsi une diminution de l'encombrement radial par confusion de la couronne et de la vis, et longitudinal par recouvrement de la totalité des trains épicycloïdaux par le piston lors de sa rétraction.

Selon un autre aspect, l'invention propose un frein incluant ou intégrant un actionneur tel qu'exposé ici, pour l'une ou l'autre des familles présentées.

En particulier, l'invention propose un étrier de frein à disque comprenant un boîtier présentant au moins un logement recevant un tel actionneur, qui est disposé et agencé pour que le mouvement de son piston vienne appuyer sur au moins une garniture de frottement au sein d'une chaîne d'appui comprenant un disque de frein enserré entre au moins deux garnitures de frottement au sein dudit étrier.

Selon une particularité, le logement de cet étrier forme une chambre hydraulique recevant le piston de manière étanche et qui est agencée pour permettre d'y appliquer une pression hydraulique déplaçant le piston dans le sens du serrage.

Optionnellement, les dentures de l'actionneur sont agencées pour permettre en déplacement en translation, selon l'axe du réducteur, entre la vis et la couronne fixe. Ce jeu est obtenu par exemple par une denture droite ou d'angle faible, conjuguée avec une longueur suffisante des dentures et un jeu en translation ménagé dans l'arrêt axial de l'arbre d'entrée amont. Cette configuration permet ainsi :

- d'une part d'autoriser un déplacement du piston dans le sens du serrage par actionnement hydraulique sans actionnement électrique (ou un actionnement moins ample et/ou décalé dans le temps), et
- d'autre part de produire un déplacement dudit piston dans le sens du desserrage par actionnement électrique (ou "declamping").

Il devient ainsi possible de diminuer les risques de serrage résiduel en dehors des périodes de freinage, ce qui diminue par exemple la consommation du véhicule ainsi que les bruits parasites et l'usure des éléments de friction.

Alternativement, l'étrier est aussi prévu avec un actionnement uniquement électrique, réalisé par un ou plusieurs actionneurs tels qu'exposés ici.

Selon une autre particularité de l'étrier selon l'invention, l'arbre d'entrée amont de l'actionneur est entraîné par un moteur ou motoréducteur électrique fixé sur le boîtier d'étrier coaxialement audit arbre d'entrée amont.

Une telle disposition permet de limiter l'encombrement latéral, par exemple par rapport aux configurations de l'art antérieur avec moteur latéral.

Selon une autre particularité, l'arbre d'entrée amont de l'actionneur est entraîné par un moteur électrique sans réduction intermédiaire, par exemple par un moteur à courant continu ou un moteur sans balai ou un moteur à reluctance variable ou un moteur à courant alternatif commandé.

Les caractéristiques de grande compacité et de taux de réduction importants se combinent avantageusement avec le montage direct d'un moteur seul pour permettre ainsi un faible encombrement et poids global y compris pour des besoins importants en matière d'effort de serrage.

Selon encore un autre aspect de l'invention, il est proposé un véhicule ou sous-ensemble de véhicule comprenant un actionneur ou un frein ou un étrier de frein tel qu'exposé ici, ou mettant en œuvre un procédé de commande tel qu'exposé ici.

Encore selon un autre aspect, l'invention propose un procédé d'actionnement en frein de stationnement d'un frein tel qu'exposé ici, ou d'un frein comprenant un actionneur tel qu'exposé ici, et qui comprend une commande d'entraînement de l'actionneur par un moteur électrique dans un sens pour le serrage et dans l'autre sens pour le desserrage dudit frein de stationnement.

Selon une particularité, un tel procédé comprend une commande d'entraînement de l'actionneur par un moteur électrique dans sens du desserrage sur une course suffisante pour diminuer d'une valeur déterminée un effort de serrage appliqué par actionnement hydraulique,

　○ lors d'une détection d'une interruption d'actionnement hydraulique du frein de service (par exemple à la fin d'une période de freinage commandée par le conducteur), permettant ainsi une limitation du freinage résiduel, ou

　○ lors d'une sélection d'une commande de desserrage du frein de service par un système de commande automatique du système de frein, par exemple dans le cadre d'une fonction d'antiblocage de frein ("ABS") ou de contrôle de trajectoire assisté ou automatisé (par exemple "ESP).

Une telle commande est applicable en particulier pour un mode de réalisation du frein dans lequel l'actionneur présente en début de course un jeu en translation suffisant pour permettre le serrage hydraulique sans nécessiter d'actionnement électrique.

Lors d'un serrage par l'actionneur électrique, l'actionnement commence alors par exemple par rattraper ce jeu. Lors du desserrage électrique du jeu de stationnement, l'actionnement en desserrage est alors poursuivi suffisamment longtemps pour recréer ce jeu.

Indépendamment des aspects précédents, mais pouvant avantageusement être combiné avec la deuxième famille de modes de réalisation présentée plus haut, il est en outre proposé un procédé de fabrication d'un actionneur ou d'un dispositif où ledit actionneur ou ledit dispositif comprend un piston cylindrique à denture intérieure.

Ce procédé comprend les étapes suivantes :

- fourniture d'une plaque métallique plane ou bidimensionnelle d'un matériau métallique (présentant une température de fusion déterminée) ;
- formation sur au moins une face de ladite plaque d'au moins un motif de denture par déformation plastique (c'est à dire en phase solide, à une température inférieure à ladite température de fusion) par forgeage ou estampage ou emboutissage au moyen d'au moins une matrice de forme complémentaire à ladite denture ;
- mise en forme de ladite plaque par flexion plastique (en phase solide) de façon à former un cylindre de révolution portant ladite denture sur sa surface intérieure ;
- réalisation d'un piston bi-matière présentant un espace intérieur délimité par la surface intérieure dudit cylindre, par coulée d'au moins un matériau durcissable autour de la surface extérieure 202 du cylindre au sein d'un moule 9 entourant ladite paroi, à une température inférieure à la température de fusion dudit cylindre, formant ainsi une paroi extérieure 203 dudit piston.

Selon une particularité, l'étape de formation de denture est réalisée avec une ou plusieurs matrices dont la forme est agencée pour réaliser une denture présentant au moins deux motifs entrecroisés présentant deux orientations différentes.

Par exemple, la denture présente d'une part un premier motif réalisant une denture à sillons parallèles entre eux selon une première orientation , répartis selon un premier axe orienté de façon à entourer de façon uniforme l'axe de révolution du piston une fois celui-ci formé, notamment selon une première orientation parallèle audit axe de révolution ; et d'autre part un deuxième motif réalisant un filetage hélicoïdal à un ou plusieurs filets selon une deuxième orientation croisant ladite première orientation.

De préférence, la paroi extérieure du piston est formée par coulée d'un matériau de type bakélite ou résine phénolique.

Il est aussi possible d'utiliser différents types connus de résine thermodurcissante, par exemple par polymérisation ou réticulation, ou un matériau thermoplastique, voire un alliage métallique léger à point de fusion inférieur à celui du matériau de la plaque.

Ainsi la production d'une denture pour train épicycloïdal, en particulier entrecoupée d'un filet de pas de vis, est réalisée par un estampage, emboutissage et/ou extrusion à partir d'une tôle ou plaque, prédécoupée ou en continu. Ce type de procédé permet de ne pas créer de bavures et d'obtenir une très grande précision et répétabilité des dentures, en tout cas dans la zone couverte par l'action de la matrice. On obtient ainsi un procédé rapide en temps de cycle, voire même permettant une production en continu. Ce cylindre est ensuit surmoulé pour réaliser la finition et ainsi obtenir le piston complet, de préférence en résine phénolique. On obtient ainsi une production fiable, rapide, économique. Celle-ci permet ainsi une bonne résistance mécanique, fournie par la denture métallique, combinée à un gain de poids qui permet de réduire les inerties de fonctionnement et la masse non suspendue. L'absence ou la baisse du nombre d'opérations d'usinage et de l'ébavurage qui va avec permet en particulier un gain économique.

Le type de configuration d'actionneur de la deuxième famille de modes de réalisation se combine particulièrement bien avec le procédé de fabrication exposé ici, qui en permet donc une production de façon industrielle, fiable et abordable sur le plan économique.

Des modes de réalisation variés de l'invention sont prévus, intégrant selon l'ensemble de leurs combinaisons possibles les différentes caractéristiques optionnelles exposées ici.

## Liste des figures

D'autres particularités et avantages de l'invention ressortiront de la description détaillée d'un mode de mise en œuvre nullement limitatif, et des dessins annexés sur lesquels :

- la FIGURE 1 est une vue en coupe longitudinale d'un actionneur électrique sur un étrier de frein à montage flottant selon l'art antérieur ;
- la FIGURE 2 est une vue en perspective qui illustre un autre exemple d'actionneur électrique à motoréducteur "latéral" sur un étrier de frein à montage flottant selon l'art antérieur ;
- les FIGURE 3 et FIGURE 4 sont des schémas cinématiques qui illustrent de façon générique le fonctionnement d'un exemple de mode de réalisation de l'actionneur selon l'invention dans une première famille de modes de réalisation, avec réducteur différentiel à un seul groupe de satellites et couronne mobile portant la vis ;
- la FIGURE 5 est un schéma cinématique qui illustre de façon plus précise un exemple du mode de réalisation préféré de l'invention dans la première famille de modes de réalisation ;
- la FIGURE 6 est une vue à l'échelle en perspective éclatée qui illustre un exemple d'actionneur selon le mode de réalisation préféré de l'invention dans la première famille de modes de réalisation ;
- les FIGURE 7, FIGURE 8, FIGURE 9 et FIGURE 10 sont des vues en perspective à l'échelle représentant certains éléments de l'actionneur de la FIGURE 6 ;
- la FIGURE 11 est une vue à l'échelle en coupe longitudinale de l'actionneur de la FIGURE 6 au sein d'un étrier à montage flottant, ici avec un moteur d'intensité 130A monté directement en bout ;
- la FIGURE 12 est une vue plus détaillée du mécanisme de l'actionneur de la FIGURE 11 ;
- la FIGURE 13 est une vue en perspective à l'échelle d'une coupe longitudinale du mécanisme de l'actionneur de la FIGURE 11 ;
- la FIGURE 14 est une demi-vue simplifiée en coupe longitudinale du mécanisme d'un actionneur selon l'invention dans une variante avec couronne mobile d'un diamètre différent de celui de la couronne fixe ;
- la FIGURE 15 est une demi-vue simplifiée en coupe longitudinale du mécanisme d'un actionneur selon l'invention dans une variante avec le filetage de la vis ne recouvrant pas la couronne fixe ;
- les FIGURE 16 et FIGURE 17 sont des vues en perspective à l'échelle qui illustrent un étrier à montage flottant avec un actionneur selon l'invention, avec un moteur sans balai et respectivement avec un moteur à courant continu ;
- la FIGURE 18 est un schéma cinématique qui illustre de façon générique le fonctionnement d'un exemple de mode de réalisation de l'actionneur selon l'invention dans une deuxième famille de modes de réalisation, avec réducteur différentiel à deux trains en série et denture à double motif croisé sur la même surface interne du piston ;
- la FIGURE 19 est une vue en perspective à l'échelle et en coupe longitudinale d'un exemple d'étrier de frein à disque incluant un actionneur de la deuxième famille de modes de réalisation, représenté sans sa paroi d'extrémité et sans sa paroi extérieure.
- les FIGURE 20 à 25 illustrent différentes étapes d'un procédé de fabrication de piston selon l'invention dans un exemple de mode de réalisation de la deuxième famille, appliqué à un piston avec denture intérieure à double orientation, droite et hélicoïdale, tel que celui utilisé dans l'exemple de la FIGURE 19 :

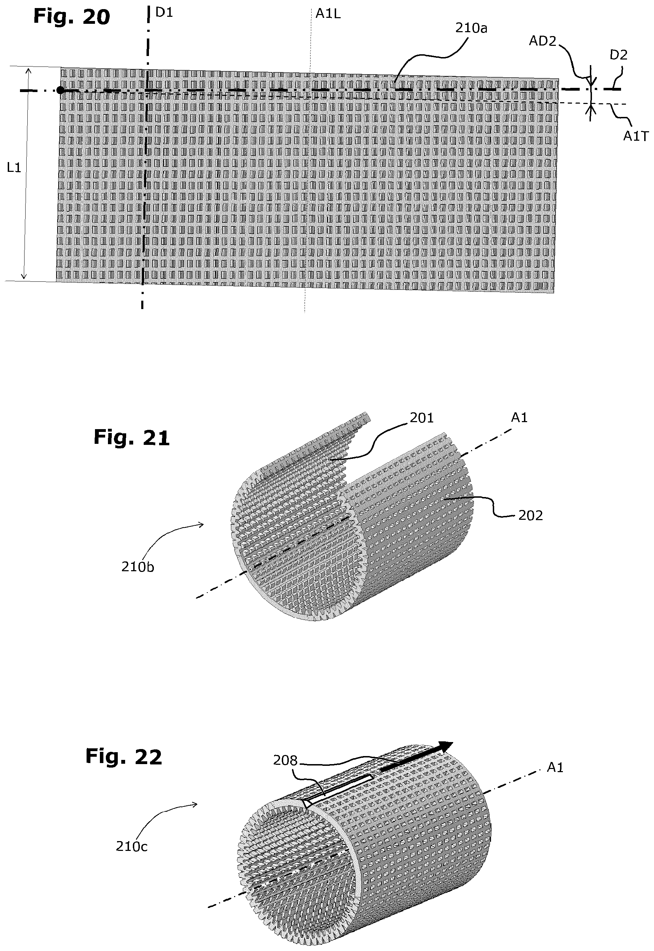

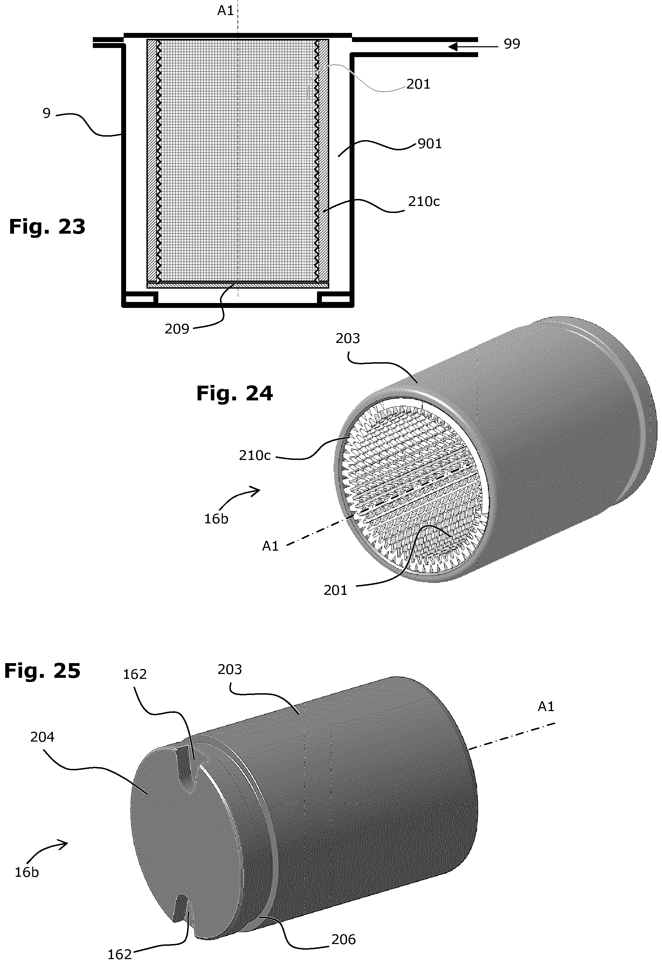

  ◦ en FIGURE 20, en vue de dessus à l'échelle de la plaque plane avec denture formée,
  ◦ en FIGURE 21, en perspective à l'échelle de la plaque en cours de mise en forme,
  ◦ en FIGURE 22, en perspective à l'échelle du cylindre une fois formé et soudé,
  ◦ en FIGURE 23, en coupe longitudinale schématique du moulage du piston avec insertion du cylindre,
  ◦ en FIGURE 24, en perspective à l'échelle du côté ouvert du piston fini,
  ◦ en FIGURE 25, en perspective à l'échelle du côté fermé du piston fini.

## Première famille de modes de réalisation

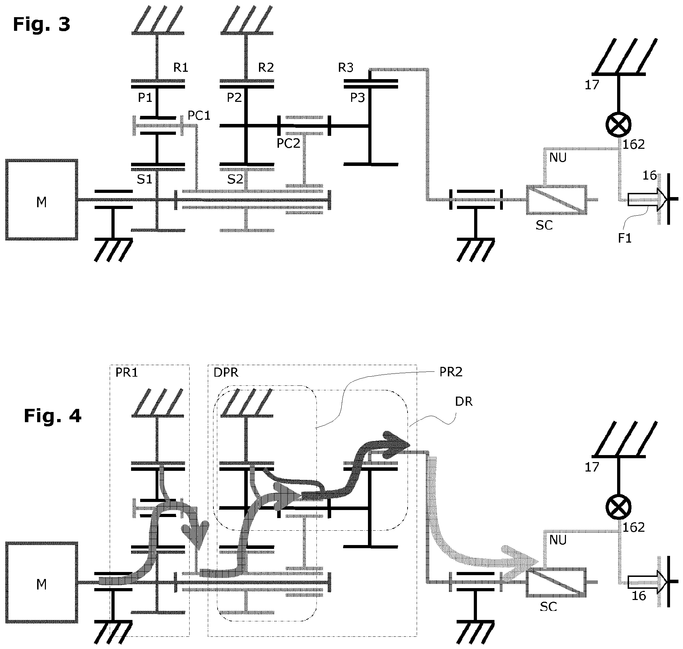

Les FIGURE 3 et FIGURE 4 illustrent de façon strictement cinématique le fonctionnement d'un exemple de mode de réalisation de l'actionneur selon l'invention, sans représenter les positions relatives des différentes pièces.

Dans ces figures est illustrée une version large de l'agencement selon l'invention. Par exemple, les satellites différentiels d'entrée P2 et de sortie P3 y sont représentés en tant que pignons solidaires en rotation entre eux mais de denture et/diamètre possiblement différents, comme il est explicitement prévu pour certains modes de réalisation qui ne seront pas détaillés plus avant.

En FIGURE 4, les flèches courbes symbolisent à titre d'illustration une forme de représentation du "trajet" de l'action mécanique d'entraînement tout au long de son "passage" au travers des étages cinématiques.

Pour chaque étage, les deux débuts de la flèche représentent chacun l'une des entrées ou références cinématiques de l'entraînement, tandis que sa fin exprime l'organe par lequel cet entraînement est transmis à l'étage suivant.

**Mode de réalisation préféré**

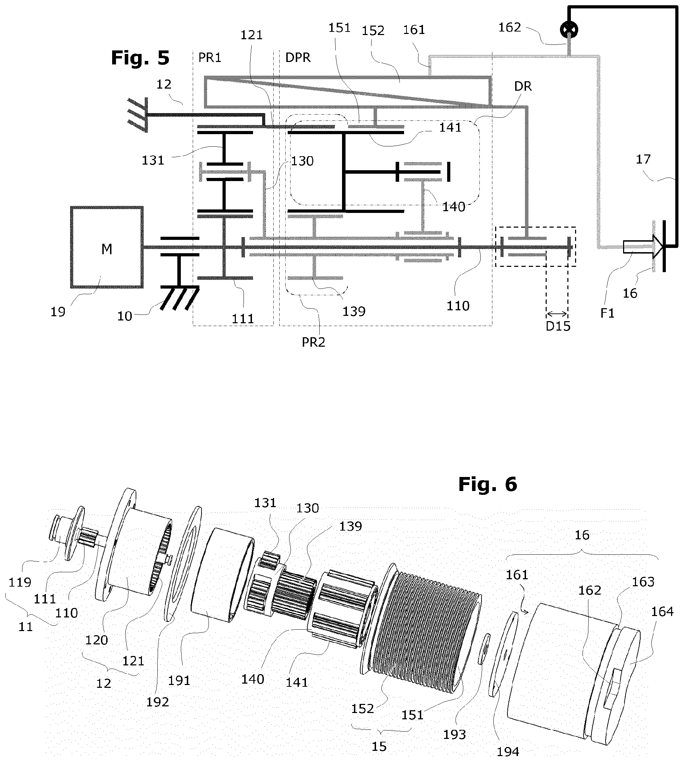

La FIGURE 5 illustre de façon schématique un exemple du mode de réalisation préféré de l'invention, et incluse certaines caractéristiques de positions des pièces. En particulier, il y est représenté le fait que la vis SC est formée par un filetage 152 extérieur qui entoure la denture 151 de la couronne mobile R3. Dans cet exemple, ce filetage 152 entoure aussi la denture 121 de la pièce 12 formant les deux couronnes fixes R2 et R3.

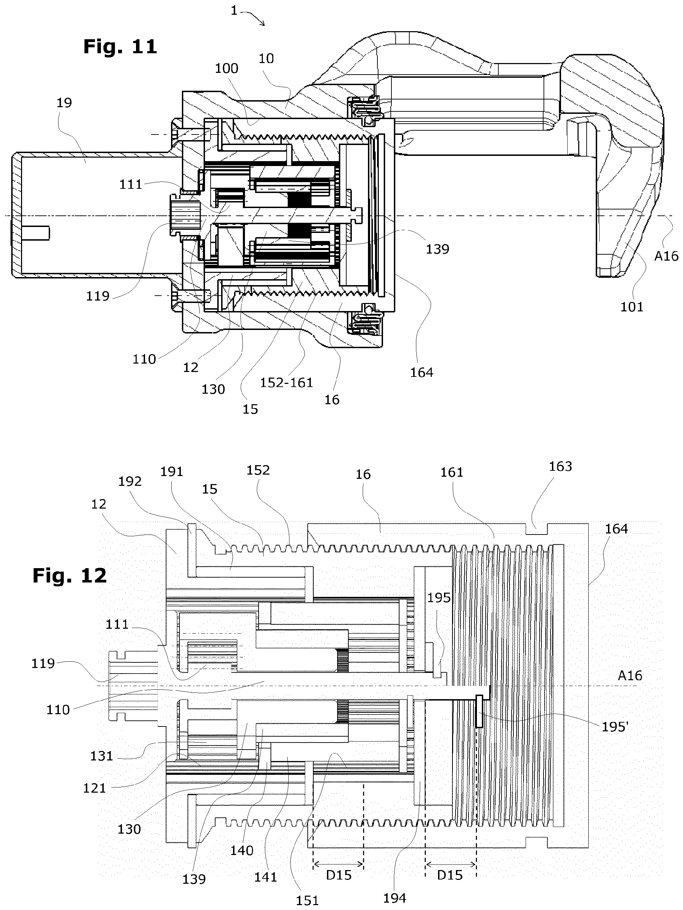

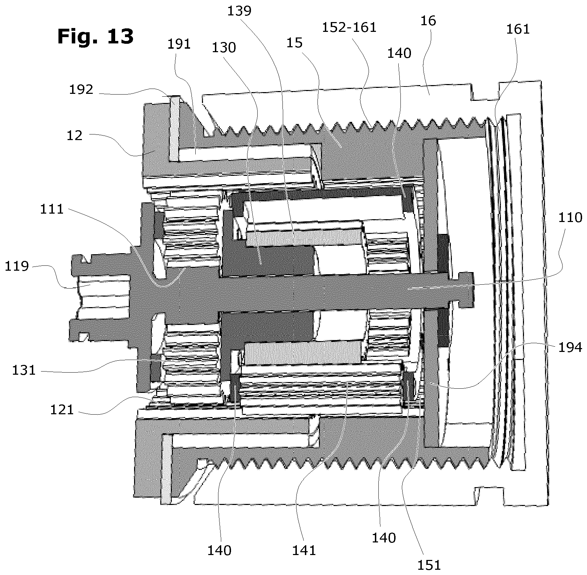

La FIGURE 6 et les FIGURE 7 à FIGURE 10 représentent les principales pièces d'un exemple réel de mise en œuvre du mode de réalisation préférée. Les FIGURE 11 à FIGURE 13 représentent ce même exemple réel en une fois assemblé.

Cet exemple d'actionneur est ici représenté en FIGURE 11 dans le cadre d'un étrier à montage flottant, mais pourrait tout à fait être employé dans d'autres types d'étrier avec peu ou pas de modifications de configuration voire de dimensions.

Dans cet exemple, l'actionneur linéaire est configuré pour un étrier 1 de frein à disque. Il comprend, comprenant de façon coaxiale entre eux :

- un train épicycloïdal amont PR1, comprenant un porte-satellites amont PC1, 130 portant des satellites amont P1, 131 qui sont entraînés par un pignon planétaire d'entrée amont S1, 111 et engrènent avec la denture 121 d'une couronne fixe 12, entraînant ainsi ledit porte-satellites amont avec une réduction amont ;
- un réducteur épicycloïdal différentiel DPR à double couronne, coaxial avec le train épicycloïdal amont PR1, comprenant un porte-satellites dit différentiel 140, PC2 portant un groupe de satellites dits différentiels, 141 portant chacun une unique denture, lesquels satellites différentiels :

  ◦ d'une part sont entraînés en entrée par un pignon planétaire d'entrée 139, S2 solidaire en rotation du porte-satellite amont 130, PC1 et coopèrent par engrènement avec la même denture 121 continue et inchangée de la couronne fixe 12 que ledit train épicycloïdal amont DPR1 pour entraîner le porte-satellite différentiel 140, PC2 selon une première réduction PR2 dans un premier sens de rotation, gain de compacité et
  ◦ d'autre part engrènent avec une couronne mobile 152, R3 de préférence de même diamètre et d'un nombre de dents différent de la couronne fixe 121 qu'ils entraînent ainsi en rotation selon une deuxième réduction DR dite "harmonique" dans un sens de rotation opposé à celui du porte-satellites différentiel 140, PC2 ; et

- un filetage extérieur 152 porté par l'extérieur de la couronne mobile 15 et coopérant avec un filetage intérieur 161 porté par l'intérieur du piston 16 ou d'un cylindre solidaire dudit piston, pour former un mécanisme vis-écrou qui déplace ledit piston en translation dans un sens dépendant du sens de rotation du pignon planétaire d'entrée amont S1, 111.

Dans cet exemple, le porte-satellites amont PC1, 130 est monté sur et guidé en rotation par un arbre de guidage 110 formant une extension axiale d'un arbre d'entrée 11, portant le pignon planétaire d'entrée S1, 111 de l'étage amont PR1. Cet arbre d'entrée 11 est ici monopièce avec le pignon d'entrée 111, ce qui est par exemple un facteur de simplification. En variante, il est cependant prévu qu'il forme une pièce différente.

De façon préférentielle mais non obligatoire, les satellites différentiels 141 du réducteur différentiel DPR sont ici montés libres en rotation dans des fenêtres longitudinales 149 ménagées dans une cage annulaire 140 entourant le pignon d'entrée 139 du réducteur différentiel DPR. Au même titre, ces satellites différentiels 141 sont en un nombre déterminé pour assurer un guidage en rotation du porte-satellites différentiel PC2 sans coopération de ladite cage 140 avec d'autres pièces que lesdits satellites différentiels 141.

Ces caractéristiques concourent en particulier à la compacité et la légèreté de l'ensemble.

Dans le présent exemple, la couronne fixe commune R1-R2 est réalisée par un cylindre formant une jupe 120 portant la denture 121 sur sa face intérieure, et présentant à son extrémité amont une flasque s'étendant radialement vers l'extérieur. Cette couronne fixe 12 est fixée à l'intérieur du logement 100 cylindrique du boîtier d'étrier 10, sur sa paroi d'extrémité, qui est traversée par l'extrémité 119 de l'arbre d'entrée 11. Le moteur 19 est fixé de l'autre côté de cette même paroi, et son arbre moteur (non représenté) est accouplé coaxialement en rotation avec l'extrémité d'entrée 119 de l'arbre d'entrée 11, ici par emmanchement complémentaire dans une forme de manœuvre.

Le porte-satellites amont 130 est traversé et guidé en rotation par un alésage intérieur monté sur une portée de l'arbre de guidage 110. Le pignon planétaire d'entrée différentiel 139 est formé par un cylindre dont l'alésage intérieur est monté solidaire en rotation sur une portée extérieure du porte-satellites amont 130, par exemple monté serré ou sur clavettes ou cannelures.

La couronne mobile est formée par une denture intérieure portée par l'intérieur d'un cylindre mobile 15, dont la surface extérieure porte le filetage 152 de la vis SC. Celui-ci, du côté du train épicycloïdal amont PR1, présente un alésage lisse qui est guidé (et mobile) en rotation sur une bague de guidage 191, par exemple en PTFE, laquelle est elle-même montée libre en rotation sur une portée extérieure cylindrique de la couronne fixe 12. A cette même extrémité, le cylindre mobile 15 est arrêté en translation par une rondelle 192, par exemple en PTFE, sur laquelle il prend appui pour résister à l'effort d'appui transmis au filetage intérieur 161 porté par l'intérieur d'un cylindre formant le piston 16. A son extrémité opposée au moteur, le piston 16 présente une face d'appui 164 qui transmet sa poussée à la garniture de frottement 17.

Au sein de l'étrier 1, celle-ci est libre en translation selon l'axe A16 du piston et maintenu en rotation autour de ce même axe. Elle présente des accidents de forme tels que des picots (non représentés) qui s'insèrent dans les encoches 163 portées par la face d'appui du piston, qu'elle immobilise ainsi en rotation lors de la rotation de la vis 152. Dans l'exemple ici présenté, le piston porte une rainure périphérique 163 accueillant un joint circulaire protégeant le mécanisme des intrusions.

Dans d'autres variantes non représentées ici, le piston porte en outre un joint d'étanchéité à la pression hydraulique qui coopère avec les parois du logement 100, lequel forme une chambre hydraulique étanche communiquant avec un circuit de commande par pression hydraulique par une entrée de fluide, de façon connue.

Comme illustré en FIGURE 12, l'actionneur comprend des moyens d'arrêt en translation qui déplacent le piston dans le sens du desserrage (ici vers la gauche) lorsque le sens de rotation appliqué entraîne la vis dans le sens opposé du serrage. Cette caractéristique permet de commander un mouvement actif de desserrage du frein, ou "declamping".

Dans la demi-vue située au dessus de l'axe, ces moyens sont situés de façon à empêcher tout jeu significatif en translation, entre la vis-couronne 15 et les parties 12 fixées au boîtier d'étrier 10, par exemple par un circlips 195 portant sur une flasque de butée 194. Cette configuration permet de limiter les jeux et d'optimiser la longueur utile de la denture 151 de la couronne mobile. Elle est par exemple bien adaptée au cas d'un étrier à actionnement uniquement électrique, ou d'un étrier mixte dans lequel l'actionneur électrique n'est utilisé que pour le frein de stationnement où elle permet de garantir un desserrage correct même après une longue immobilisation.

Selon une variante illustrée par l'autre demi-vue de la FIGURE 12 située en dessous de l'axe, les dentures de l'actionneur sont agencées pour permettre en déplacement en translation (selon l'axe du réducteur) entre la vis 15, SC et la couronne fixe 12, NU, par exemple avec des dentures droites ou d'angle faible, une longueur suffisante des dentures et un jeu en translation entre la vis-couronne mobile 15 et les parties fixes 12. Cette configuration permet ainsi

- d'une part d'autoriser un déplacement du piston 16 dans le sens du serrage par actionnement hydraulique sans actionnement électrique (ou un actionnement moins ample et/ou décalé dans le temps), et
- d'autre part de produire un déplacement dudit piston dans le sens du desserrage par actionnement électrique 19, ou "declamping".

Le déplacement positif de desserrage obtenu par l'actionneur électrique ne nécessite qu'une course faible, et sera par exemple rattrapé aussitôt après par un déplacement identique en sens inverse permettant de redonner le jeu nécessaire à l'actionnement hydraulique tout en restant limité pour ne pas déclencher de lui-même un nouveau serrage.

Dans l'autre demi-vue de la FIGURE 12 située en dessous de l'axe, cette configuration est réalisée à titre d'exemple par une configuration de l'arbre de guidage 110 portant un arrêt axial 195' situé plus à droite de façon à laisser un jeu axial permettant une course D15, laquelle se répercute dans le déplacement de la denture 151 par rapport aux satellites différentiels 141.

**Exemple de dimensionnement**

Il va maintenant être présenté un exemple numérique de rapport de réduction global apporté par l'actionneur selon l'invention.

Cet exemple numérique est valable pour la plupart des modes de réalisation de l'invention, avec les avantages de compacité (entre autres) qu'elle apporte.

Il est ici développé plus particulièrement dans le cas du mode de réalisation préféré, tel qu'illustré en référence aux FIGURE 3 à FIGURE 13.

Cinématique du train épicycloïdal amont - PR1

L'étage épicycloïdal amont PR1 fournit une réduction amont déterminée par les éléments suivants :

- entrée par le pignon planétaire amont S1 (111) ;
- référence par la couronne fixe amont R1 (121) ;
- sortie par le porte-satellites amont PC1 (130).

Dans ce train épicycloïdal classique, avec le symbole Z pour les nombres de dents et le symbole $\Omega$ pour les vitesses de rotation, on obtient :

$$\Omega_{PC1} = \frac{Z_{S1} \times \Omega_{S1}}{Z_{S1} + Z_{P1}}$$ pour la vitesse de rotation du porte-satellite différentiel PC1 (130), qui porte les satellites amont P1 (131).

Cinématique du réducteur différentiel - DPR : étage épicycloïdal PR2

L'étage épicycloïdal PR2 du réducteur différentiel DPR fournit une première réduction déterminée par les éléments suivants :

- entrée par le pignon planétaire S2 (139) solidaire en rotation du porte-satellite amont PC1 (130) ;
- référence par la deuxième couronne fixe R2 (121), confondue dans cet exemple avec la couronne fixe amont R1 ;
- sortie par le porte-satellites différentiel PC2 (140).

Dans ce train épicycloïdal classique, avec le symbole Z pour les nombres de dents et le symbole $\Omega$ pour les vitesses de rotation, on obtient :

$$\Omega_{PC2} = \frac{Z_{S2} \times \Omega_{S2}}{Z_{S2} + Z_{P2}}$$ pour la vitesse de rotation du porte-satellite différentiel PC2

$$\Omega_{P2} = \frac{Z_{R2} \times \Omega_{PC2}}{Z_{P2}}$$ pour la vitesse de rotation des satellites d'entrée P2, ici confondus avec les satellites différentiels 141.

Cinématique du réducteur différentiel - DPR : étage différentiel DR

L'étage différentiel DR du réducteur différentiel DPR fournit une deuxième réduction déterminée par les éléments suivants :

- première entrée (dans un sens de rotation) par le porte-satellite différentiel PC2 (140) ;
- deuxième entrée (dans le sens de rotation opposé) par les satellites différentiels P2 (141) ;
- sortie par la couronne mobile R3 (151) (dans le sens de rotation du porte-satellites PC2).

Dans cet étage différentiel DR :

- la rotation en sortie $\Omega_{R3}$ est issue de la rotation $\Omega_{PC2}$ du porte-satellite PC2 (140) et la rotation $\Omega_{P3}$ des satellites de sorties P3, ici confondus avec les satellites différentiels 141.
- Aucune pièce n'est fixée dans cet étage différentiel DR.
- Les rotations $\Omega_{PC2}$ et $\Omega_{P3}$ sont imposées par l'étage épicycloïdal PR2.
- Les rotations $\Omega_{PC2}$ et $\Omega_{P3}$ sont reliées par la formule de Willis, qui donne l'équation différentielle de vitesse pour un train épicycloïdal classique :

$$\Omega planetary2 = \Omega satcarrier - \Omega sat * \frac{Zsat}{Zplanetary2}$$

où *Zplanetary2* est le ratio de nombres de dents menantes/menées.

Pour un tel train épicycloïdal, on obtient :

$$\Omega planetary2 = \Omega satcarrier * \left(1 - \frac{Zplanetary1}{Zplanetary2}\right)$$

c'est à dire

$$\Omega planetary2 = \frac{\Omega entrée * Zentrée}{Zentrée + Zplanetary1} * \left(1 - \frac{Zplanetary1}{Zplanetary2}\right)$$

En considérant cet étage différentiel DR selon le principe d'un tel train épicycloïdal avec :

-    la couronne mobile R3 (151) considérée comme étant l'élément *planetary2*, et
-    la couronne fixe R2 (121) comme étant l'élément *planetary*1 ;

on obtient :

$$\Omega_{R3} = \Omega_{PC2} * \left(1 - \frac{Z_{R2}}{Z_{R3}}\right) \text{ c'est à dire } \Omega_{R3} = \frac{\Omega_{S2} * Z_{S2}}{Z_{S2} + Z_{R2}} * \left(1 - \frac{Z_{R2}}{Z_{R3}}\right)$$

Dans cette relation, on choisit le ratio $\left(1 - \frac{Z_{R2}}{Z_{R3}}\right)$ pour répondre aux contraintes propres à la configuration du mécanisme ici employée, sur le plan du décalage entre les nombres de dents entre la couronne fixe R2 (121) et la couronne mobile R3 (151), en particulier pour obtenir un nombre de dents entier pour chaque couronne.

Dans le cas particulier de l'exemple illustré ici, ces deux couronnes E2 et E3 engrènent avec un même groupe de satellites qui présente une même denture pour chacune des deux couronnes.

Ces deux couronnes présentent donc ici un même diamètre. Pour obtenir une réduction, il faut donc que la couronne fixe R2 (121) présente un nombre de dents $Z_{R2}$ inférieur au nombre de dents $Z_{R3}$ de la couronne mobile R3 (151). On réalise cette différence en utilisant deux modules de denture différents entre ces deux couronnes, et pour les satellites 141 un module qui soit compatible avec ces deux modules différents.

Par rapport à un réducteur à deux trains épicycloïdaux classiques montés en série, ce réducteur différentiel DPR présente différents avantages, et par exemple :

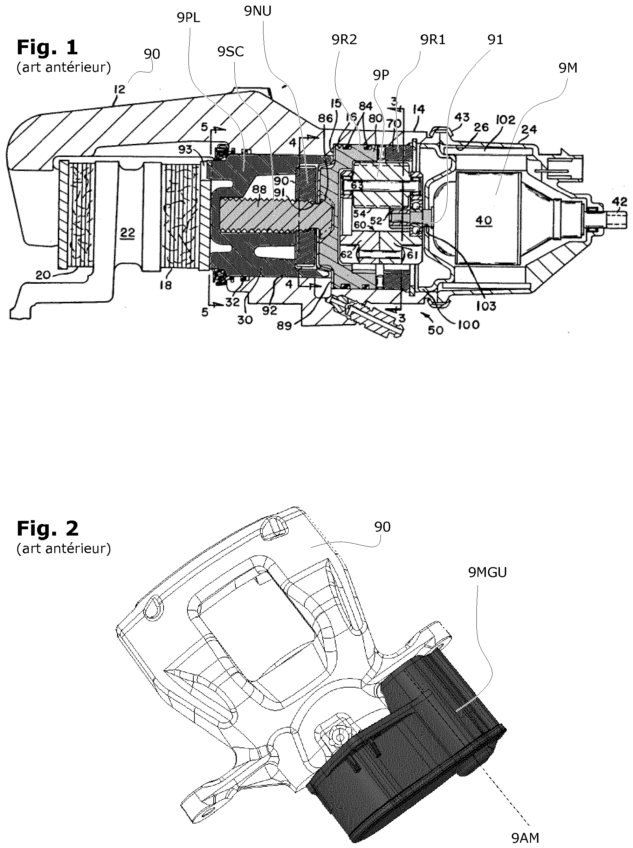

-    moins de pièces (un seul porte-satellites et un seul jeu de satellites)
-    moins d'inertie pour un même ratio de transmission (c'est à dire taux de réduction) ;
-    un encombrement plus réduit pour un même ratio de transmission et un même couple transmis ;
-    par rapport à un réducteur à un seul train épicycloïdal tel qu'employé dans le motoréducteur illustré en FIGURE 2, ce réducteur différentiel DPR peut être réalisé avec les mêmes dimensions mais avec deux étages de réduction au lieu d'un seul ;
-    le même matériau peut être utilisé pour les deux étages de réduction.

Dimensionnement

Dans l'exemple ici présenté, les satellites présente les contraintes suivantes :

-    au total trois parties dont l'une DPR à deux étages PR2 et DR
-    de préférence nombres de dents différents pour les deux groupes de satellites 131 et 141
-    même diamètre à l'extérieur des satellites
-    module différent entre les deux étages PR2 et DR, et donc pour les deux couronnes 121 et 151
-    les satellites doivent pouvoir engrener avec les deux couronnes

Pour la compatibilité de denture entre les satellites différentiels 414 et les deux couronnes 121, 151 de nombres de dents différents : le paramètre d'espacement ("spacing") est choisi le plus bas possible, et le paramètre de décalage ("offset") est alors choisi pour permettre l'engrènement entre les modules différents.

Un exemple de dimension pour la configuration présentée ici fournit les valeurs suivantes :

Pour le train épicycloïdal amont PR1, on utilise une hypothèse avec des paramètres d'entrée en vitesse de rotation d'entrée $\Omega_{S1max}$=10000 t/mn et couple $C_{S1max}$=1,2 Nm, une proposition de dimensionnement donne les paramètres suivants :

| | |
|---|---|
| module pour les différents éléments : | $m_{PR1}$=0,7 |
| nombre de dents du pignon d'entrée 111 : | $Z_{S1}$=10 |
| nombre de dents des satellites 131 : | $Z_{P1}$=18 |
| nombre de dents de la couronne fixe 121 (R1) : | $Z_{R1}=Z_{R2}$=50 |

Pour le réducteur épicycloïdal différentiel DPR : On obtient des paramètres d'entrée de $\Omega_{S2max}$=1600 t/mn et couple $C_{S2max}$=27 Nm. une proposition de dimensionnement donne les paramètres suivants :

| | | |
|---|---|---|
| - pignon d'entrée différentiel 139 (S2) : | nombre de dents | $Z_{S2}$=33 |
| | module | $m_{S2}$=0,6 |
| - porte-satellites différentiel 130 (PC2) et satellites différentiels 141 : | | |
| nombre de dents | $Z_{P2}$= 11, | |
| module | $m_{P2}$= 0,6 et | |
| | $a_{PC2}$= 13,6mm | |
| - couronne fixe 121 (R2 et R1) : | nombre de dents | $Z_{R2}$=50 |
| | module | $m_{R2}$=de 0,684 à 0,7 |
| - couronne mobile 151 (R3) : | nombre de dents | $Z_{R3}$=57 |
| | module | $m_{R3}$=0,6 |

Pour le réducteur épicycloïdal différentiel DPR dans ce dimensionnement, on obtient ainsi un taux de réduction, c'est à dire le ratio vitesse de rotation de sortie sur vitesse de rotation d'entrée valant 22,2.

Pour obtenir ce ratio avec deux trains épicycloïdaux classiques montés en série, il faudrait un encombrement bien plus important.

Pour tous les étages de réduction PR1, PR2 et DR, dans ce dimensionnement, obtient ainsi un taux de réduction, c'est à dire le ratio vitesse de rotation de sortie sur vitesse de rotation du moteur valant 135,6.

Le taux de réduction ainsi obtenu est ainsi légèrement plus élevé que celui d'un motoréducteur latéral comme celui de la FIGURE 2, d'environ 1/125.

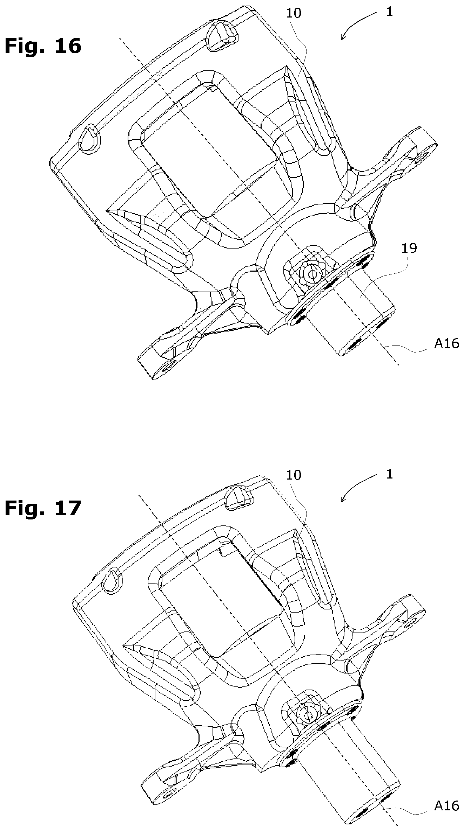

Comme on le voit en FIGURE 16 et FIGURE 17 respectivement avec un moteur sans balai et avec un moteur à courant continu, ce meilleur taux est obtenu pour un encombrement et un poids encore plus faible.

Pour le mécanisme vis-écrou SC-NU (152-161) : le pas des filetages 152 et 161 de la vis 15 (SC) et de l'écrou 16 (NU) peut être choisi indépendamment des contraintes et interdépendances de dentures et de dimensions des éléments du mécanisme épicycloïdal, ce qui permet d'obtenir différentes caractéristiques d'actionneur pour un même réducteur épicycloïdal global PR1, PR2, DR.

De préférence, comme illustré en FIGURE 11 et aux FIGURE 16 et FIGURE 17, l'actionneur est entraîné directement par un moteur 19 monté en bout de l'arbre d'entrée 11 et fixé sur le boîtier d'étrier 10, sans réducteur supplémentaire.

Le moteur 19 entraîne l'arbre d'entrée 11 par un accouplement 119 à une vitesse de rotation $\Omega_{mot}$.

L'ensemble du réducteur formé par les trois étages PR1, PR2 et DR fournit une vitesse de rotation réduite $\Omega_{red}$.

Cette vitesse de rotation est convertie en translation par le filetage 152, 161 du mécanisme vis-écrou 15-16.

A titre d'exemple, il est proposé un pas de filetage de vis-écrou choisi à P=2mm/tour.

Pour un tel pas, dans l'exemple de dimensionnement ci-dessus, un tel actionneur peut ainsi fournir un effort de serrage F16 appliqué par le piston 16 à la garniture de frottement allant jusqu'à 40 kN.

## Exemples de variantes du mode de réalisation préféré

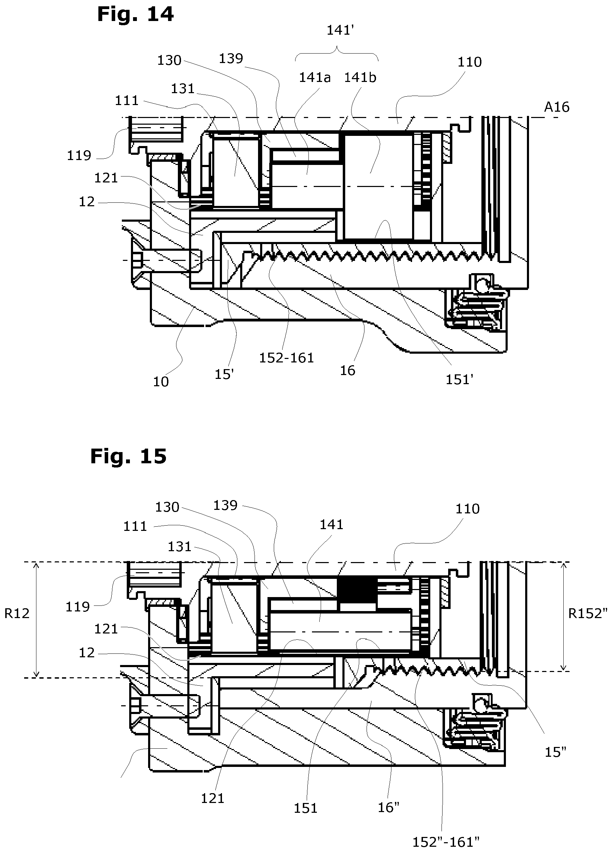

En FIGURE 14 est illustré le mécanisme d'un actionneur selon l'invention dans une variante dans laquelle la couronne mobile 15' porte une denture intérieure 151' d'un diamètre différent de celui de la couronne fixe 121. En jouant sur cette différence de diamètres, on obtient ainsi des paramètres supplémentaires permettant d'adapter le dimensionnement cinématique et/ou en charge transmissible.

Les satellites différentiels 141' présentent ainsi chacun une première partie longitudinale 141a d'un premier diamètre engrenant avec la denture 121 de la couronne fixe 12, et une deuxième partie longitudinale 141b engrenant avec la denture 151' de la couronne mobile 15'.

En FIGURE 15 est illustré le mécanisme d'un actionneur selon l'invention dans une autre variante, pouvant être combinée avec la précédente.

Dans cette variante, le filetage 152" de la vis 15" ne recouvre pas la denture 121 de la couronne fixe 12. Comme on le voit sur la figure, ce filetage 152" peut ainsi être réalisé selon un rayon R152" plus petit que dans le mode de réalisation des FIGURE 6 à FIGURE 13, par exemple sensiblement identique voire inférieur au rayon extérieur R12 de la pièce 12 formant la couronne fixe 12. Le rayon du filetage intérieur 161" du piston 16" peut en être réduit d'autant.

On obtient par exemple une plus grande liberté de conception pour les dimensions extérieures de l'actionneur, ce qui peut faciliter son intégration ou son positionnement dans le frein qu'il active.

### Deuxième famille de modes de réalisation

### Exemple d'actionneur

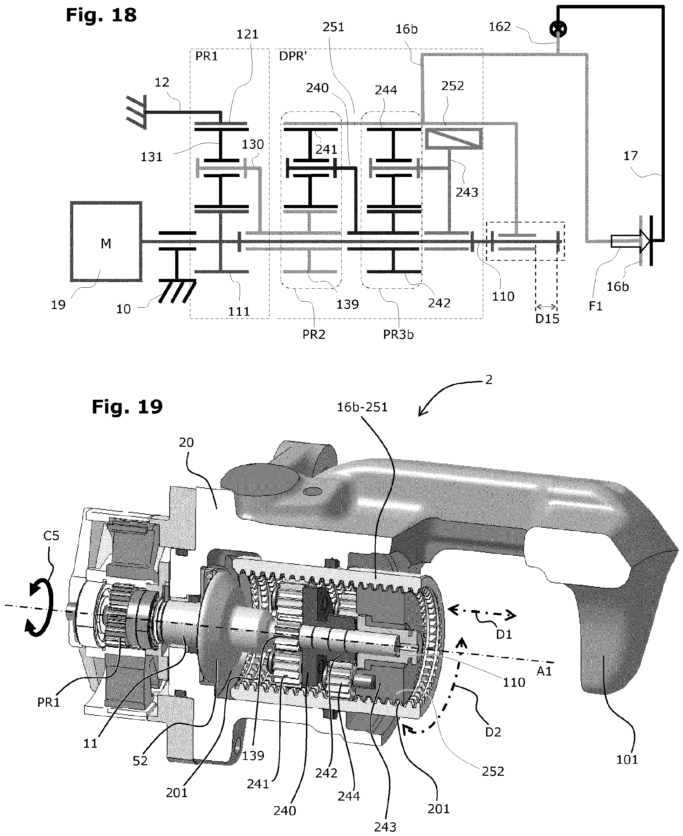

La FIGURE 19 un exemple d'étrier 2 de frein à disque incluant un actionneur muni du piston des FIGURE 24 et FIGURE 25.

Dans cet exemple, l'étrier est d'un type à montage flottant à un seul piston et un actionneur. D'autres configurations sont prévues avec plusieurs pistons et/ou plusieurs actionneurs, en version flottante ou en version fixe.

Cet actionneur comprend un premier et un deuxième trains épicycloïdaux monté en série, chacun entraîné en entrée par son pignon planétaire 139, 242. Ces deux trains fournissent chacun une réduction en sortie par leur porte-satellites 240, 243, et leurs les satellites 141b, 244 engrènent selon la première orientation D1 avec la denture 201 du piston 16b, ici une denture droite c'est à dire longitudinale.

Le piston 16b fixé en rotation, ici par les encoches 162 portées par la face d'appui que réalise le fond 204 du piston, et qui coopèrent de façon connue avec des accidents de forme dépassant de la garniture de frottement (non représentée) au contact de cette face d'appui 204.

Ce piston 16b est déplacé en translation longitudinale (ici vers la droite dans le sens du serrage) par coopération de cette même denture intérieure 201 selon la deuxième orientation D2 avec un élément fileté entraîné en rotation par le porte-satellites 243 du deuxième train épicycloïdal, par exemple solidaire avec lui voire monopièce comme dans le présent exemple.

Par l'appui de la vis 252 (filetage porté par exemple par le porte-satellites 243) sur le boîtier d'étrier 20 grâce à un roulement sur lequel appuie axialement une flasque 52 dépassant de l'arbre d'entraînement 11, le piston 16b appuie ainsi avec un effort F1 sur sa garniture de frottement (non représentée). De façon connue, cette dernière enserre ainsi la piste de frottement d'un rotor ou disque de frein avec une autre garniture de frottement, laquelle prend appui dans la direction opposée sur les doigts d'étrier 101.

Dans le présent exemple, l'actionneur est entraîné par un couple C5 fourni par un moteur électrique (non représenté), si besoin par l'intermédiaire d'un réducteur épicycloïdal d'entrée PR1, pour réaliser une fonction de frein de service et de frein de stationnement, c'est à dire fonctionnement uniquement électrique et sans hydraulique.

### Fabrication du piston

Les FIGURE 20 à FIGURE 25 illustrent ainsi un exemple de mode de réalisation de l'invention, à travers différentes étapes de fabrication d'un piston de frein dans une version avec denture intérieure à double orientation.

A partir d'une plaque métallique bidimensionnelle, on forme la denture par estampage matriciel, de préférence par forgeage, c'est à dire par déformation plastique à froid mais possiblement aussi à chaud mais sur un matériau en phase solide (c'est à dire à une température inférieure à sa température de fusion voire à sa température de transition vitreuse). La plaque de départ est de préférence plane, mais possiblement aussi selon une surface ouverte réglée mais non plane.

Cet estampage est réalisé par exemple par des techniques connues, par exemple en une ou plusieurs passes comprenant chacune une application sur la surface de la plaque d'une matrice présentant une forme complémentaire à la denture recherchée.

Comme illustré en FIGURE 20 la plaque obtenue 210a présente une denture croisée qui combine plusieurs orientations.

La première orientation, selon la direction D1, forme une série de sillons parallèles entre eux, qui formera ultérieurement la denture périphérique d'un engrenage intérieur, par exemple avec le profil transversal de dents d'engrenage classiques. Dans le cas présent pour une denture droite, la direction D1 est ainsi parallèle à une direction dite longitudinale A1L, définie comme parallèle à l'axe A1 ultérieur du piston à réaliser.

Dans le cas présent, la deuxième orientation, selon la direction D2, forme une série de sillons parallèles entre eux, qui formera ultérieurement un filetage intérieur, par exemple avec le profil transversal d'un filet classique. Comme illustré, cette direction D2 forme un angle AD2 avec la direction dite transversale A1T, perpendiculaire à la direction longitudinale A1L. Cet angle est déterminé en fonction du pas choisi pour le filetage à obtenir.

Comme illustré sur les figures, on comprend que cette denture à deux orientations croisée forme ainsi des dents (partie dépassant par rapport au fond des sillons) formant une excroissance interrompue, ressemblant plus ou moins à des pyramides. Cependant, bien que chaque motif de denture ne soit pas continu dans ses reliefs comme peut l'être une denture classique mono-orientation, chacun de ces motifs est identique à ou compatible avec une denture classique par la continuité de ses sillons. Dans chacune de ses orientations, la denture combinée ainsi obtenue est donc parfaitement compatible avec les reliefs d'une denture classique qui lui correspond de façon complémentaire. Ainsi, la denture intérieure combinée bi-orientations obtenue est à la fois compatible avec la denture extérieure classique du pignon et avec la denture extérieure classique de la vis avec lesquelles elles doivent coopérer lors du fonctionnement.

Cet estampage est appliqué par exemple par une ou plusieurs matrices présentant une forme complémentaire de la denture définitive. Alternativement, il est appliqué par plusieurs matrices successives présentant chacune une forme complémentaire aux sillons de l'une des orientations.

L'estampage peut être réalisé par pressage alternatif d'une matrice plane, ou roulage sous pression sous une matrice arrondie, ou toute autre méthode connue.

Optionnellement mais non obligatoirement, l'étape d'estampage de denture est appliquée à une plaque métallique continue ou semi-continue. C'est-à-dire que cette plaque présentant au moins une dimension, par exemple sa dimension longitudinale L1, qui est suffisamment grande pour recevoir une denture réalisant la surface intérieure d'une pluralité d'exemplaires du piston à réaliser. Par exemple, la denture peut être estampée de façon continue directement en sortie de laminage.

L'estampage est réalisé par exemple par pressage simultané de deux matrices coordonnées entre elles, appliquées sur les deux faces opposées 201 et 202 de la plaque, donnant ainsi des motifs en forme de creux visibles en FIGURE 21 et FIGURE 22 sur la face extérieure 202 opposée à la face fonctionnelle 201 devenant la face intérieure.

Comme illustré en FIGURE 21, après estampage et finition complète de la denture sur la surface fonctionnelle 201 de la plaque initiale, on courbe la plaque métallique avec sa surface fonctionnelle 201 du côté intérieur, selon une forme cylindrique 210b autour d'un axe A1 parallèle à direction longitudinale A1L, par exemple autour d'un mandrin cylindrique possiblement lisse.

De préférence, comme on le voit en FIGURE 22, le cylindre complet ainsi obtenu 210c est alors soudé 208 sur la jointure de ses bords opposés, ici de façon longitudinale.

Comme illustré en FIGURE 23, on insère le cylindre 210c dans un moule définissant la forme extérieure future du piston à fabriquer. En injectant un matériau durcissable dans l'espace 901 entourant la surface extérieure périphérique 202 du cylindre, on réalise ainsi une paroi extérieure 203 intimement liée au cylindre métallique 210c. Cet ensemble réalise ainsi un piston bi-matière 16b dont la surface intérieure 201 est formée par la surface fonctionnelle de la plaque estampée et mise en forme, comme illustré ici en FIGURE 24 et FIGURE 25.

Dans le présent exemple, la forme extérieure du piston est prévue avec des encoches 162 antirotation et une rainure périphérique 206 prévue pour recevoir un joint, par exemple anti poussières. Optionnellement, une rainure similaire est prévue aussi, en plus ou à la place, pour recevoir un joint d'étanchéité à la pression hydraulique.

Dans certains modes de réalisation, en fonction des besoins, le moule est agencé pour former une paroi de fond 204 fermant l'extrémité du cylindre 210c et donc du piston 16b ainsi obtenu.

Optionnellement, comme dans le présent exemple, cette paroi de fond est obtenu en disposant une plaque 209 circulaire au fond du moule 9, par exemple avant le cylindre 210c, qui formera ainsi un insert (par exemple métallique) renforçant le fond 204 du piston, par exemple dans le but de réaliser un piston utilisable dans un étrier mixte à actionnement hydraulique et électrique.

D'autres méthodes sont envisagées pour réaliser cette paroi de fond 204, par exemple un noyau amovible inséré à l'intérieur du cylindre 210c pour le moulage.

Bien sûr, l'invention n'est pas limitée aux exemples qui viennent d'être décrits et de nombreux aménagements peuvent être apportés à ces exemples sans sortir du cadre de l'invention.

### Nomenclature

### Etat de la technique (FIGURE 1, FIGURE 2)

90    boîtier d'étrier

| 91 | arbre d'entrée |
| 9AM | axe de moteur |
| 9M | moteur électrique |
| 9MGU | ensemble motoréducteur |
| 9NU | écrou de mécanisme vis-écrou |
| 9P | satellites de réducteur épicycloïdal |
| 9PL | piston de frein |
| 9R1 | première couronne |
| 9R2 | deuxième couronne |
| 9SC | vis de mécanisme vis-écrou |

**Invention (FIGURE 3 à FIGURE 17)**

| PR1 | train épicycloïdal amont |
| DPR | réducteur épicycloïdal |
| PR2 | premier train épicycloïdal différentiel |
| DR | étage différentiel |
| F1 | force d'appui |
| P1 | satellites de train épicycloïdal amont |
| P2 | satellites d'entrée du train épicycloïdal différentiel |
| P3 | satellites de sortie du train épicycloïdal différentiel |
| PC1 | porte-satellites de train épicycloïdal amont |
| PC2 | porte-satellites de train épicycloïdal différentiel |
| R1 | couronne fixe amont |
| R2 | couronne fixe différentielle |
| R3 | couronne mobile |
| S1 | pignon planétaire de train épicycloïdal amont |
| S2 | pignon planétaire de réducteur épicycloïdal différentiel |
| SC | vis de mécanisme vis-écrou |
| NU | écrou de mécanisme vis-écrou |
| 1 | étrier |
| 10 | boîtier d'étrier |
| 100 | logement de piston |
| 101 | doigt(s) d'étrier |
| 11 | arbre d'entrée |
| 110 | arbre de guidage |
| 111 | pignon planétaire amont |
| 119 | extrémité d'entraînement de l'arbre d'entrée |
| 12 | couronne fixe commune |
| 120 | jupe de la couronne fixe |
| 121 | denture de la couronne fixe |
| 130 | porte-satellites amont |
| 131 | satellites amont |
| 139 | pignon planétaire différentiel |
| 140 | porte-satellites différentiel |
| 141, 141' | satellites différentiels |
| 141a | partie des portes satellites différentiels engrenant avec la couronne fixe |
| 141b | partie des portes satellites différentiels engrenant avec la couronne mobile |
| 149 | fenêtres longitudinales du porte-satellites différentiel |
| 15, 15', 15" | pièce formant la couronne mobile et la vis |
| 151, 151' | denture de la couronne mobile |
| 152, 152" | filetage de la vis |
| 16, 16" | pièce formant écrou et piston de frein |
| 161 | filetage intérieur de piston-écrou |
| 162 | encoches anti-rotation du piston |
| 163 | rainure de joint de piston |

| 164 | face d'appui du piston |
|---|---|
| 17 | garniture de frottement |
| 19 | moteur électrique |
| 191 | palier de guidage de la couronne mobile |
| 192 | flasque de butée axiale de la couronne mobile |
| 193, 194 | rondelles d'arrêt axial de la couronne mobile |
| 195, 195' | circlips d'arrêt axial de la couronne mobile |
| A16 | axe de piston de frein |
| D15 | jeu axial d'actionnement hydraulique |
| R12 | rayon extérieur de la jupe de couronne fixe |
| R152" | rayon extérieur du filetage de la vis de couronne mobile |

**Invention (complément pour les FIGURE 18 à FIGURE 25)**

| A1T | direction transversale de la plaque |
|---|---|
| A1L | direction longitudinale de la plaque |
| L1 | dimension longitudinale de la plaque |
| D1 | première orientation de denture |
| D2 | deuxième orientation de denture |
| AD2 | angle de deuxième orientation de denture |
| PR3b | deuxième train épicycloïdal différentiel |
| 210a | plaque plane avec denture |
| 210b | plaque en cours de mise en forme |
| 210c | cylindre formé en cours de soudure |
| 9 | moule de piston |
| 901 | espace du moule entourant le cylindre |
| 99 | injection de matériau durcissable |
| 16b, 251 | piston de frein / couronne fixe en rotation |
| A1 | axe de piston |
| 201 | face fonctionnelle / denture intérieure |
| 202 | face extérieure de la plaque |
| 203 | paroi extérieure du piston |
| 204 | paroi de fond du piston |
| 206 | rainure de joint |
| 208 | soudure des bords de la plaque |
| 209 | plaque de fond de piston |
| 2 | étrier de frein à disque |
| 20 | boîtier d'étrier |
| 139 | pignon d'entrée de premier train épicycloïdal différentiel |
| 241 | satellites de premier train épicycloïdal |
| 240 | porte-satellites de premier train épicycloïdal différentiel |
| 242 | pignon d'entrée de deuxième train épicycloïdal différentiel |
| 244 | satellites de deuxième train épicycloïdal différentiel |
| 252, 243 | élément fileté / porte-satellites du deuxième train épicycloïdal différentiel |
| 52 | flasque d'appui de l'arbre d'entrée |
| C5 | couple d'entrée |

**Revendications**

1. Actionneur linéaire, notamment pour étrier (1, 2) de frein à disque, par piston avec réducteur du type comprenant

 - un réducteur épicycloïdal différentiel (DPR) comprenant au moins deux étages partageant entre eux un élément cinématique commun (PC2, 140, satellites 141, ou couronne 1561), dans lequel :

  ○ un premier étage épicycloïdal (PR2) comprend un groupe de satellites d'entrée (P2, 141, 241), entraînés en entrée par engrènement avec un pignon planétaire d'entrée (S2, 139) et qui engrènent avec une couronne fixe en rotation (R2, 121), entraînant un porte-satellites d'entrée (PC2, 140, 240) avec une première réduction (PR2), et
◦ un deuxième étage épicycloïdal (PR3, PR3b) comprend un groupe de satellites de sortie (P3, 141, 244) portés par un porte-satellites de sortie (140, 243) et qui engrènent avec une couronne (R3, 151, 251), pour fournir une deuxième réduction (DR, PR2') ; et

- un mécanisme vis-écrou (SC-NU, 152-161, 252-251) entraîné en rotation par la sortie (R3, 151, 243) dudit réducteur différentiel (DPR, DPR') pour déplacer un piston (16, 16b) mobile en translation selon l'axe dudit train épicycloïdal différentiel, dans le sens du serrage,

ledit actionneur étant **caractérisé**

a) **en ce qu'**il comprend en outre un étage amont de réduction (PR1) entraînant le réducteur différentiel (DPR) par un train épicycloïdal amont comprenant un porte-satellites amont (PC1, 130) solidaire en rotation du pignon d'entrée planétaire (S2, 139) dudit réducteur différentiel, ledit porte-satellites amont (PC1, 130) portant un groupe de satellites amont (P1, 131) qui :

◦ engrènent avec une couronne fixe (R1, 121), et
◦ sont entraînés en entrée par engrènement avec un pignon planétaire amont (S1, 111) ; et

b) **en ce que** la sortie (R3, 151, 140) du réducteur différentiel (DPR) entraîne en rotation une vis (SC, 152, 252) qui coopère avec un écrou (NU, 161, 251) fixe en rotation qui est formé à l'intérieur d'une pièce solidaire du piston ou à l'intérieur du piston (16, 16b) lui-même.

2. Actionneur selon la revendication précédente, **caractérisé en ce que** :

- le porte-satellites d'entrée (PC2, 140) est confondu ou solidaire en rotation avec le porte-satellites de sortie, formant ainsi un élément commun au premier et au deuxième étages dudit réducteur épicycloïdal différentiel (DPR) ;
- les satellites de sortie (141) du deuxième étage dudit réducteur épicycloïdal différentiel (DPR) engrènent avec une couronne mobile (R3, 151) laquelle est ainsi entraînée en rotation pour fournir une deuxième réduction (DR), qui est déterminée par le ratio entre le rayon fois le nombre de dents de la couronne mobile et le rayon fois le nombre de dents de la couronne fixe ;
et **en ce que**
- **en ce que** la couronne mobile (R3, 151) du réducteur différentiel (DPR) entraîne en rotation une vis (SC, 152) formée dans une pièce entourant la denture de ladite couronne mobile (R3, 151) et solidaire de ladite couronne mobile ; laquelle vis (SC, 152) coopère avec un écrou (NU, 161) fixe en rotation qui est formé à l'intérieur d'une pièce solidaire du piston ou du piston (16) lui-même.

3. Actionneur selon l'une quelconque des revendications précédentes, **caractérisé en ce que** le filetage (152) de la vis (SC) et la denture (151) de la couronne mobile (R3) sont formés dans la même pièce (15).

4. Actionneur selon l'une quelconque des revendications précédentes, **caractérisé en ce que** le filetage (161) de l'écrou (NU) est formé dans un alésage formé à l'intérieur du piston (16).

5. Actionneur selon l'une quelconque des revendications précédentes, **caractérisé en ce qu'**il présente des dimensions déterminées pour que le filetage utile (152) de la vis (SC) entoure en tout ou partie la denture (121) de la couronne fixe (12, R1, R2).

6. Actionneur selon l'une quelconque des revendications précédentes, **caractérisé en ce que** la couronne fixe (R1) de l'étage amont (PR1) et la couronne fixe (R2) du réducteur différentiel (DPR) sont réalisées dans une même pièce (12) par une denture (121) commune et continue.

7. Actionneur selon l'une quelconque des revendications précédentes, comprenant de façon coaxiale :

- un train épicycloïdal amont (PR1), comprenant un porte-satellites amont (PC1, 130) portant des satellites amont (P1, 131) qui sont entraînés par un pignon planétaire d'entrée amont (S1, 111) et engrènent avec la denture (121) d'une couronne fixe (12), entraînant ainsi ledit porte-satellites amont avec une réduction amont ;
- un réducteur épicycloïdal différentiel (DPR) à double couronne, coaxial avec le train épicycloïdal amont (PR1), comprenant un porte-satellites dit différentiel (140, PC2) portant un groupe de satellites dits différentiels, (141) portant chacun une unique denture, lesquels satellites différentiels :

◦ d'une part sont entraînés en entrée par un pignon planétaire d'entrée (139, S2) solidaire en rotation du porte-satellite amont (13, 130, PC1) et coopèrent par engrènement avec la même denture (121) de la couronne fixe (12) que ledit train épicycloïdal amont (DPR1) pour entraîner le porte-satellite différentiel (140, PC2) selon une première réduction (PR2) dans un premier sens de rotation, et
◦ d'autre part engrènent avec une couronne mobile (152, R3) qu'ils entraînent ainsi en rotation selon une deuxième réduction (DR) dite "harmonique" dans un sens de rotation opposé à celui du porte-satellites différentiel (140, PC2) ;

- un filetage extérieur (152) porté par l'extérieur de la couronne mobile (15) et coopérant avec un filetage intérieur (161) porté par l'intérieur du piston (16) ou d'un cylindre solidaire dudit piston, pour former un mécanisme vis-écrou qui déplace ledit piston en translation dans un sens dépendant du sens de rotation du pignon planétaire d'entrée amont (S1, 111).

8. Actionneur selon l'une quelconque des revendications précédentes, **caractérisé en ce que** le porte-satellites amont (PC1, 130) est monté sur et guidé en rotation par un arbre de guidage (110) formant une extension axiale d'un arbre d'entrée 11 portant le pignon planétaire d'entrée (S1, 111) de l'étage amont (PR1).

9. Actionneur selon la revendication 1, **caractérisé en ce que** le premier et le deuxième étage épicycloïdaux du réducteur différentiel sont montés en série, fonctionnant tous deux avec une couronne fixe en rotation ;
**en ce que** les satellites de sortie (244) du deuxième étage épicycloïdal (PR3b) dudit réducteur épicycloïdal différentiel (DPR) engrènent avec une couronne fixe en rotation (251), dont la denture est formée selon une première orientation (D1) sur la surface intérieure (201) du piston (16b), lequel forme un cylindre de révolution coaxial audit deuxième étage épicycloïdal ;
et **en ce que** le porte-satellites (243) dudit deuxième étage épicycloïdal (PR3b) entraîne en sortie un élément fileté (252) qui lui est coaxial et porte sur sa surface extérieure un filetage coopérant avec un filetage formé sur la même surface intérieure (201) dudit piston (16b) selon une deuxième orientation (D2) distincte de la première orientation (D1), entraînant (F1) ainsi ledit piston en translation (D1) selon son axe (A1) par rapport au châssis de l'actionneur.

10. Dispositif d'étrier (1, 2) de frein à disque, ou véhicule ou sous-ensemble de véhicule comprenant un tel étrier, **caractérisé en ce que** ledit étrier comprend un actionneur selon l'une quelconque des revendications précédentes, lequel est agencé dans un logement (100) ménagé au sein d'un boîtier (10) dudit étrier (1), de façon à ce que le mouvement de son piston (16, 16b) vienne appuyer sur au moins une garniture de frottement (17) au sein d'une chaîne d'appui comprenant un disque (19) de frein enserré entre au moins deux garnitures de frottement (17, 17') au sein dudit étrier.

11. Dispositif selon la revendication précédente, **caractérisé en ce que** le logement forme une chambre hydraulique recevant le piston de manière étanche et qui est agencée pour permettre d'y appliquer une pression hydraulique déplaçant le piston dans le sens du serrage.

12. Dispositif selon la revendication précédente, **caractérisé en ce que** les dentures de l'actionneur sont agencées pour permettre en déplacement en translation entre la vis (15, SC) et la couronne fixe (12, NU) et ainsi :

- d'une part autoriser un déplacement du piston (16) dans le sens du serrage par actionnement hydraulique sans actionnement électrique, et
- d'autre part produire un déplacement dudit piston dans le sens du desserrage par actionnement électrique (19).

13. Dispositif selon l'une quelconque des revendications 10 à 12, **caractérisé en ce que** l'arbre d'entrée amont (11) de l'actionneur est entraîné par un moteur (19) ou motoréducteur électrique sans réduction intermédiaire, qui est fixé sur le boîtier d'étrier (10) coaxialement audit arbre d'entrée amont.

14. Procédé de fabrication d'un actionneur selon l'une quelconque des revendications 1 à 9 ou d'un dispositif selon l'une quelconque des revendications 10 à 13, ledit actionneur ou ledit dispositif comprenant un piston (16, 16b) cylindrique à denture intérieure, **caractérisé en ce qu'**il comprend les étapes suivantes :

- fourniture d'une plaque métallique plane ou bidimensionnelle d'un matériau métallique ;
- formation sur au moins une face de ladite plaque d'une denture par déformation plastique par estampage ou emboutissage au moyen d'au moins une matrice de forme complémentaire à ladite denture, laquelle denture présente :

◦ un premier motif réalisant une denture à sillons parallèles entre eux selon une première orientation (D1), répartis selon un premier axe (A1L) orienté de façon à entourer de façon uniforme l'axe de révolution (A1) du piston (1) une fois celui-ci formé, notamment selon une première orientation parallèle audit axe de révolution, et
◦ un deuxième motif réalisant un filetage hélicoïdal à un ou plusieurs filets selon une deuxième orientation (D2) croisant ladite première orientation (D1) ;

- mise en forme de ladite plaque (210a) par flexion plastique de façon à former un cylindre (210c) de révolution portant ladite denture sur sa surface intérieure (201) ;
- réalisation d'un piston (16, 16b) bi-matières présentant un espace intérieur délimité par la surface intérieure (201) dudit cylindre (210c), par coulée (99) d'au moins un matériau durcissable autour (901) de la surface extérieure (202) du cylindre au sein d'un moule (9) entourant ladite surface extérieure, à une température inférieure à la température de fusion dudit cylindre, formant ainsi une paroi extérieure (203) dudit piston.

**15.** Procédé d'actionnement en frein de stationnement d'un dispositif selon l'une quelconque des revendications 10 à 13, ou d'un frein comprenant un actionneur selon l'une quelconque des revendications 1 à 9, **caractérisé en ce qu'**il comprend une commande d'entraînement de l'actionneur par un moteur électrique (19) dans un sens pour le serrage et dans l'autre sens pour le desserrage dudit frein de stationnement.

**16.** Procédé selon la revendication précédente, **caractérisé en ce qu'**il est appliqué à un dispositif selon l'une quelconque des revendications 12 ou 13 et comprend une commande d'entraînement de l'actionneur par un moteur électrique (19) dans sens du desserrage sur une course suffisante pour diminuer d'une valeur déterminée un effort de serrage appliqué par actionnement hydraulique,

◦ lors d'une détection d'une interruption d'actionnement hydraulique du frein de service, permettant ainsi une limitation du freinage résiduel, ou
◦ lors d'une sélection d'une commande de desserrage du frein de service par un système de commande automatique du système de frein.

## Patentansprüche

**1.** Linear-Kolbenaktuator, insbesondere für Scheibenbremssattel (1, 2), mit Untersetzungsgetriebe vom Typ umfassend

- ein differentielles, epizyklisches Untersetzungsgetriebe (DPR) mit mindestens zwei Stufen, die sich untereinander ein gemeinsames Antriebselement (PC2, 140, Planeten 141 oder Kranz 1561) aufteilen, wobei:

◦ eine erste epizyklische Stufe (PR2) eine Anordnung von Eingangsplaneten (P2, 141, 241) umfasst, welche eingangs durch Verzahnung mit einem Eingangsplanetenrad (S2, 139) angetrieben werden und mit einem drehfesten Kranz (R2, 121) in Eingriff kommen, wobei ein Eingangsplanetenträger (PC2, 140, 240) mit einer ersten Untersetzung (PR2) angetrieben wird, und
◦ eine zweite epizyklische Stufe (PR3, PR3b) eine Anordnung von Ausgangsplaneten (P3, 141, 244) umfasst, welche durch einen Ausgangsplanetenträger (140, 243) getragen werden und mit einem Kranz (R3, 151, 251) in Eingriff kommen, um eine zweite Untersetzung (DR, PR2') bereitzustellen; und

- ein Schraubengetriebe (SC-NU, 152-161, 252-251) durch den Ausgang (R3, 151, 243) des differentiellen Untersetzungsgetriebes (DPR, DPR') zur Bewegung eines in der Achse des differentiellen Planetengetriebes verschiebbeweglichen Kolbens (16, 16b) in die Anziehrichtung drehangetrieben wird,

wobei der Aktuator **dadurch gekennzeichnet ist,**

a) **dass** er außerdem eine vorgelagerte Untersetzungsstufe (PR1) umfasst, die das differentielle Untersetzungsgetriebe (DPR) durch ein vorgelagertes Planetengetriebe antreibt, welches einen vorgelagerten, mit dem Eingangsplanetenrad (S2, 139) des differentiellen Untersetzungsgetriebes drehfest gekoppelten Planetenträger (PC1, 130) umfasst, wobei der vorgelagerte Planetenträger (PC1, 130) eine Anordnung von vorgelagerten Planeten (P1, 131) trägt, welche:

- mit einem festen Kranz (R1, 121) in Eingriff kommen, und
- eingangs durch Verzahnung mit einem vorgelagerten Planetenrad (S1, 111) angetrieben werden; und

b) dadurch, dass der Ausgang (R3, 151, 140) des differentiellen Untersetzungsgetriebes (DPR) eine Schraube (SC, 152, 252) drehantreibt, welche mit einer drehfesten Mutter (NU, 161, 251) zusammenwirkt, die innerhalb eines mit dem Kolben gekoppelten Bauteils oder innerhalb des Kolbens (16, 16b) selbst gebildet ist.

2. Aktuator nach dem vorhergehenden Anspruch, **dadurch gekennzeichnet, dass**:

- der Eingangsplanetenträger (PC2, 140) mit dem Ausgangsplanetenträger vereinigt oder drehfest gekoppelt ist, wobei ein Element gebildet wird, das der ersten und der zweiten Stufe des differentiellen epizyklischen Untersetzungsgetriebes (DPR) gemeinsam ist;
- die Ausgangsplaneten (141) der zweiten Stufe des differentiellen epizyklischen Untersetzungsgetriebes (DPR) mit einem beweglichen Kranz (R3, 151) in Eingriff kommen, welcher somit zur Bereitstellung einer zweiten Untersetzung (DR) drehangetrieben wird, welche durch das Verhältnis Radius mal Anzahl der Zähne des beweglichen Kranzes zu Radius mal Anzahl der Zähne des festen Kranzes bestimmt wird; und dadurch, dass
- der bewegliche Kranz (R3, 151) des differentiellen Untersetzungsgetriebes (DPR) eine Schraube (SC, 152) drehantreibt, die in einem Bauteil gebildet ist, das die Verzahnung des beweglichen Kranzes (R3, 151) umgibt und mit dem beweglichen Kranz gekoppelt ist; wobei die Schraube (SC, 152) mit einer drehfest gelagerten Mutter (NU, 161) zusammenwirkt, welche innerhalb eines mit dem Kolben gekoppelten Bauteils oder des Kolbens (16) selbst gebildet ist.

3. Aktuator nach einem der vorhergehenden Ansprüche, **dadurch gekennzeichnet, dass** das Gewinde (152) der Schraube (SC) und die Verzahnung (151) des beweglichen Kranzes (R3) in dem gleichen Bauteil (15) gebildet werden.

4. Aktuator nach einem der vorhergehenden Ansprüche, **dadurch gekennzeichnet, dass** das Gewinde (161) der Mutter (NU) in einer innerhalb des Kolbens (16) gebildeten Durchbohrung gebildet ist.

5. Aktuator nach einem der vorhergehenden Ansprüche, **dadurch gekennzeichnet, dass** er derart bestimmte Abmessungen aufweist, dass das Nutzgewinde (152) der Schraube (SC) die Verzahnung (121) des festen Kranzes (12, R1, R2) ganz oder teilweise umgibt.

6. Aktuator nach einem der vorhergehenden Ansprüche, **dadurch gekennzeichnet, dass** der feste Kranz (R1) der vorgelagerten Stufe (PR1) und der feste Kranz (R2) des differentiellen Untersetzungsgetriebes (DPR) in einem gleichen Bauteil (12) durch eine gemeinsame und durchgehende Verzahnung (121) ausgebildet sind.

7. Aktuator nach einem der vorhergehenden Ansprüche, koaxial umfassend:

- ein vorgelagertes Planetengetriebe (PR1), einen vorgelagerten Planetenträger (PC1, 130) umfassend, welcher vorgelagerte Planeten (P1, 131) trägt, welche durch ein vorgelagertes Eingangsplanetenrad (S1, 111) angetrieben werden und mit der Verzahnung (121) eines festen Kranzes (12) in Eingriff kommen, wobei somit der vorgelagerte Planetenträger mit einer vorgelagerten Untersetzung angetrieben wird;
- ein differentielles epizyklisches, mit dem zu dem vorgelagerten Planetengetriebe (PR1) koaxial gelagertes Untersetzungsgetriebe (DPR) mit doppeltem Kranz, einen sogenannten differentiellen Planetenträger (140, PC2) umfassend, welcher eine Anordnung von sogenannten differentiellen Planeten (141) trägt, welche jeweils eine einzelne Verzahnung tragen, wobei die differentiellen Planeten:

- einerseits eingangs durch ein mit dem vorgelagerten Planetenträger (13, 130, PC1) drehbar gekoppeltes Eingangsplanetenrad (139, S2) angetrieben sind und mit der gleichen Verzahnung (121) des festen Kranzes (12) als das vorgelagerte Planetengetriebe (DPR1) verzahnt zusammenwirken, um den differentiellen Planetenträger (140, PC2) in einer ersten Untersetzung (PR2) in einer ersten Drehrichtung anzutreiben, und

∘ andererseits mit einem beweglichen Kranz (152, R3) in Eingriff kommen, den sie somit in einer zweiten, sogenannten "harmonischen" Untersetzung (DR) in einer zur Drehrichtung des differentiellen Planententrägers (140, PC2) entgegengesetzten Drehrichtung drehantreiben;

- ein Außengewinde (152), das durch die Außenseite des beweglichen Kranzes (15) getragen ist und mit einem Innengewinde (161) zusammenwirken, das durch die Innenseite des Kolbens (16) oder eines mit dem Kolben gekoppelten Zylinders getragen wird, um ein Schraubensystem zu bilden, welches den Kolben in einer Richtung in Abhängigkeit von der Drehrichtung des vorgelagerten Eingangsplanetenrads (S1, 111) verschiebend bewegt.

8. Aktuator nach einem der vorhergehenden Ansprüche, **dadurch gekennzeichnet, dass** der vorgelagerte Planetenträger (PC1, 130) auf einer Führungswelle (110) gelagert und durch eine solche drehgeführt wird, wobei eine axiale Verlängerung einer Eingangswelle 11 gebildet wird, die das Eingangsplanetenrad (S1, 111) der vorgelagerten Stufe (PR1) trägt.

9. Aktuator nach Anspruch 1, **dadurch gekennzeichnet, dass** die erste und die zweite epizyklischen Stufen des differentiellen Untersetzungsgetriebes in Reihe geschaltet sind, wobei beide mit einem drehfesten Kranz betrieben werden;
dadurch, dass die Ausgangsplaneten (244) der zweiten epizyklischen Stufe (PR3b) des differentiellen epizyklischen Untersetzungsgetriebes (DPR) mit einem drehfesten Kranz (251) in Eingriff kommen, dessen Verzahnung in einer ersten Ausrichtung (D1) auf der Innenoberfläche (201) des Kolbens (16b) gebildet ist, welcher einen koaxial zu der zweiten epizyklischen Stufe umlaufenden Zylinder bildet;
und dadurch, dass der Planetenträger (243) der zweiten epizyklischen Stufe (PR3b) am Ausgang ein koaxial zu ihm gelagerten Gewindeteil (252) antreibt, welches auf seiner Außenoberfläche ein Gewinde trägt, das mit einem Gewinde zusammenwirkt, welches auf der gleichen Innenoberfläche (201) des Kolbens (16b) in einer zweiten, von der ersten Ausrichtung (D1) unterschiedlichen Ausrichtung (D2) gebildet ist, wobei somit der Kolben in seiner Achse (A1) gegenüber dem Rahmen des Aktuators verschiebend (D1) angetrieben (F1) wird.

10. Vorrichtung eines Scheibenbremssattels (1, 2) oder Fahrzeug oder Unteranordnung eines Fahrzeugs mit einem solchen Sattel, **dadurch gekennzeichnet, dass** der Bremssattel einen Aktuator nach einem der vorhergehenden Ansprüche umfasst, welcher Aktuator in einer innerhalb eines Gehäuses (10) des Bremssattels gelagerten (1) Aufnahme (100) derart angeordnet ist, sodass die Bewegung seines Kolbens (16, 16b) sich auf wenigstens einer Reibbelagsscheibe (17) innerhalb einer Abstützungskette abstützt, welche eine zwischen mindestens zwei Reibbelagsscheiben (17, 17') innerhalb des Bremssattels eingespannte Bremsscheibe (19) umfasst.

11. Vorrichtung nach dem vorhergehenden Anspruch, **dadurch gekennzeichnet, dass** die Aufnahme eine hydraulische Kammer bildet, die den Kolben wasserdicht aufnimmt und derart angeordnet ist, dass sie mit einem hydraulischen Druck beaufschlagt werden kann, womit der Kolben in die Anziehrichtung bewegt wird.

12. Vorrichtung nach dem vorhergehenden Anspruch, **dadurch gekennzeichnet, dass** die Verzahnungen des Aktuators derart angeordnet sind, dass eine Verschiebbewegung zwischen der Schraube (15, SC) und dem festen Kranz (12, NU) ermöglicht ist, und somit:

- einerseits eine Bewegung des Kolbens (16) in die Richtung des Anziehens durch hydraulische Betätigung ohne elektrische Betätigung ermöglicht wird, und
- andererseits eine Bewegung des Kolbens in die Richtung des Lösens durch elektrische Betätigung (19) erzeugt wird.

13. Vorrichtung nach einem der Ansprüche 10 bis 12, **dadurch gekennzeichnet, dass** die vorgelagerte Eingangswelle (11) des Aktuators durch einen auf dem Gehäuse (10) des Bremssattels koaxial zur vorgelagerten Eingangswelle angebrachten Motor (19) oder elektrischen Getriebemotor ohne Zwischenuntersetzung angetrieben wird.

14. Herstellungsverfahren eines Aktuators nach einem der Ansprüche 1 bis 9 oder einer Vorrichtung nach einem der Ansprüche 10 bis 13, wobei der Aktuator oder die Vorrichtung einen zylindrischen Kolben (16, 16b) mit Innenverzahnung umfasst, **dadurch gekennzeichnet, dass** es bzw. sie folgende Schritte umfasst:

- Bereitstellung einer ebenen oder zweidimensionalen Metallplatte aus einem Metallwerkstoff;
- Bildung einer Verzahnung auf wenigstens einer Seite der Platte durch plastische Verformung durch Formstanzen oder Tiefziehen mittels mindestens einer Matrix mit einer der Verzahnung entsprechenden Form, wobei die Verzahnung aufweist:

    ◦ ein erstes Muster, das eine Verzahnung mit zueinander parallel verlaufenden Rillen in einer ersten Ausrichtung (D1) ausführt, wobei die Rillen in einer ersten Achse (A1L) verteilt sind, die derart ausgerichtet ist, dass die Umlaufachse (A1) des Kolbens (1) einheitlich umrandet wird, wenn der Kolben gebildet ist, insbesondere in einer ersten, zu der Umlaufachse parallel verlaufenden Ausrichtung, und

    ◦ ein zweites Muster, das ein schneckenförmiges, ein- bzw. mehrgängiges Gewinde in einer zweiten, die erste Ausrichtung (D1) durchkreuzenden Ausrichtung (D2) ausführt;

- Formen der Platte (210a) durch plastische Biegung, sodass ein Umlaufzylinder (210c) gebildet wird, der die Verzahnung auf seinem Innenoberfläche (201) trägt;

- Ausführung eines einen durch die Innenoberfläche (201) des Zylinders (210c) begrenzten Innenraum aufweisenden Kolbens (16, 16b) aus zwei Werkstoffen durch Gießen (99) von mindestens einem härtbaren Werkstoff (901) um die Außenoberfläche (202) des Zylinders herum innerhalb einer diese Außenoberfläche umgebenden Form (9) bei einer Temperatur kleiner als die Schmelztemperatur des Zylinders, wobei somit eine Außenwand (203) des Kolbens gebildet wird.

**15.** Verfahren zur Betätigung als Parkbremse einer Vorrichtung nach einem der Ansprüche 10 bis 13 oder einer Bremse mit einem Aktuator nach einem der Ansprüche 1 bis 9, **dadurch gekennzeichnet, dass** es einen Befehl zum Antrieb des Aktuators durch einen Elektromotor (19) in eine Richtung für das Anziehen und in die andere Richtung für das Lösen der Parkbremse.

**16.** Verfahren nach dem vorhergehenden Anspruch, **dadurch gekennzeichnet, dass** es bei einer Vorrichtung nach einem der Ansprüche 12 oder 13 angewendet wird und einen Befehl zum Antrieb des Aktuators durch einen Elektromotor (19) in die Richtung des Lösens auf einem Hub umfasst, der ausreicht, um eine durch hydraulische Betätigung beaufschlagte Anziehkraft auf einen vorbestimmten Wert zu senken,

    ◦ während eine Unterbrechung der hydraulischen Betätigung der Betriebsbremse erkannt wird, wodurch die Restbremswirkung eingeschränkt wird, oder

    ◦ während ein Befehl zum Lösen der Betriebsbremse durch ein automatisches Steuerungssystem der Bremsanlage angewählt wird.

**Claims**

**1.** Piston linear actuator, in particular for a disc brake caliper (1, 2), with a reducer of the type comprising

- a differential planetary reducer (DPR) comprising at least two stages sharing a common kinematic element (PC2, 140, planet gears 141, or ring gear 1561), in which:

    ◦ a first planetary stage (PR2) comprises a group of input planet gears (P2, 141, 241) which are driven at input by meshing with an input sun gear (S2, 139) and which mesh with a ring gear that is fixed in rotation (R2, 121), driving an input planet carrier (PC2, 140, 240) with a first reduction (PR2), and

    ◦ a second planetary stage (PR3, PR3b) comprises a group of output planet gears (P3, 141, 244) which are carried by an output planet carrier (140, 243) and which mesh with a ring gear (R3, 151, 251), to provide a second reduction (DR, PR2'); and

- a screw and nut mechanism (SC-NU, 152-161, 252-251) driven in rotation by the output (R3, 151, 243) of said differential reducer (DPR, DPR') in order to displace a piston (16, 16b) that is moveable in translation along the axis of said differential planetary gearset, in the gripping direction,

said actuator being **characterized**

a) **in that** it also comprises an upstream reduction stage (PR1) driving the differential reducer (DPR) by an upstream planetary gearset comprising an upstream planet carrier (PC1, 130) rotationally integral with the input sun gear (S2, 139) of said differential reducer, said upstream planet carrier (PC1, 130) carrying a group of upstream planet gears (P1, 131) which:

◦ mesh with a fixed ring gear (R1, 121), and
◦ are driven at input by meshing with an upstream sun gear (S1, 111); and

b) **in that** the output (R3, 151, 140) of the differential reducer (DPR) drives in rotation a screw (SC, 152, 252) which cooperates with a nut (NU, 161, 251) which is fixed in rotation and which is formed inside a part that is fixed to the piston or is formed inside the piston (16, 16b) itself.

2. Actuator according to the preceding claim, **characterized in that**:

- the input planet carrier (PC2, 140) is integral with the output planet carrier or rotationally fixed to it, thus forming an element common to the first and second stages of said differential planetary reducer (DPR);
- the output planet gears (141) of the second stage of said differential planetary reducer (DPR) mesh with a moveable ring gear (R3, 151), which is thus driven in rotation to provide a second reduction (DR) which is determined by the ratio between the radius multiplied by the number of teeth of the moveable ring gear and the radius multiplied by the number of teeth of the fixed ring gear; and
- **in that** the moveable ring gear (R3, 151) of the differential reducer (DPR) drives in rotation a screw (SC, 152) formed in a part surrounding the toothing of said moveable ring gear (R3, 151) and fixed to said moveable ring gear; said screw (SC, 152) cooperates with a nut (NU, 161) which is fixed in rotation and which is formed inside a part that is fixed to the piston or is formed inside the piston (16) itself.

3. Actuator according to any one of the preceding claims, **characterized in that** the threading (152) of the screw (SC) and the toothing (151) of the moveable ring gear (R3) are formed in the same part (15).

4. Actuator according to any one of the preceding claims, **characterized in that** the threading (161) of the nut (NU) is formed in a bore formed inside the piston (16).

5. Actuator according to any one of the preceding claims, **characterized in that** it has dimensions determined so that the useful threading (152) of the screw (SC) entirely or partially surrounds the toothing (121) of the fixed ring gear (12, R1, R2).

6. Actuator according to any one of the preceding claims, **characterized in that** the fixed ring gear (R1) of the upstream stage (PR1) and the fixed ring gear (R2) of the differential reducer (DPR) are produced in one and the same part (12) by a common and continuous toothing (121).

7. Actuator according to any one of the preceding claims, coaxially comprising:

- an upstream planetary gearset (PR1), comprising an upstream planet carrier (PC1, 130) carrying upstream planet gears (P1, 131) which are driven by an upstream input sun gear (S1, 111) and mesh with the toothing (121) of a fixed ring gear (12), thus driving said upstream planet carrier with an upstream reduction;
- a differential planetary reducer (DPR) having a double ring gear, coaxial with the upstream planetary gearset (PR1), comprising a planet carrier called differential planet carrier (140, PC2) carrying a group of planet gears called differential planet gears (141), each having a unique toothing, which planet gears:

◦ on the one hand are driven at input by an input sun gear (139, S2) firmly fixed in rotation to the upstream planet carrier (13, 130, PC1) and cooperate by meshing with the same toothing (121) of the fixed ring gear (12) as said upstream planetary gearset (DPR1) to drive the differential planet carrier (140, PC2) according to a first reduction (PR2) in a first direction of rotation, and
◦ on the other hand mesh with a moveable ring gear (152, R3) which they thus drive in rotation according to a second reduction (DR), called "harmonic" reduction, in a direction of rotation opposite to that of the differential planet carrier (140, PC2);

- an external threading (152) borne by the outside of the moveable ring gear (15) and cooperating with an internal threading (161) borne inside the piston (16) or inside a cylinder that is fixed to said piston, to form a screw and nut mechanism which displaces said piston in translation in a direction dependent on the direction of rotation of the upstream input sun gear (S1, 111).

8. Actuator according to any one of the preceding claims, **characterized in that** the upstream planet carrier (PC1, 130) is mounted on and guided in rotation by a guide shaft (110) forming an axial extension of an input shaft (11) carrying the input sun gear (S1, 111) of the upstream stage (PR1).

9. Actuator according to claim 1, **characterized in that** the first and the second planetary stage of the differential reducer are mounted in series, both operating with a ring gear that is fixed in rotation;
in that the output planet gears (244) of the second planetary stage (PR3b) of said differential planetary reducer (DPR) mesh with a ring gear that is fixed in rotation (251), the toothing of which is formed according to a first orientation (D1) on the internal surface (201) of the piston (16b), which forms a cylinder of revolution coaxial to said second planetary stage;
and **in that** the planet carrier (243) of said second planetary stage (PR3b) drives at output a threaded element (252) which is coaxial to it and bears on its external surface a threading cooperating with a threading formed on the same internal surface (201) of said piston (16b) according to a second orientation (D2) different from the first orientation (D1), thus driving (F1) said piston in translation (D1) along its axis (A1) with respect to the frame of the actuator.

10. Disc brake caliper device (1, 2), or vehicle or vehicle sub-assembly comprising such a caliper, **characterized in that** said caliper comprises an actuator according to any one of the preceding claims, which is arranged in a housing (100) arranged within a casing (10) of said caliper (1), so that the movement of the piston thereof (16, 16b) presses on at least one friction lining (17) within a chain of force comprising a brake disc (19) gripped between at least two friction linings (17, 17') within said caliper.

11. Device according to the preceding claim, **characterized in that** the housing forms a hydraulic chamber which receives the piston in a sealed manner and which is arranged to allow a hydraulic pressure to be applied thereto, displacing the piston in the gripping direction.

12. Device according to the preceding claim, **characterized in that** the toothings of the actuator are arranged to allow a displacement in translation between the screw (15, SC) and the fixed ring gear (12, NU) and thus:

- on the one hand allow a displacement of the piston (16) in the direction of gripping by hydraulic actuation without electrical actuation, and
- on the other hand produce a displacement of said piston in the direction of releasing by electrical actuation (19).

13. Device according to any one of claims 10 to 12, **characterized in that** the upstream input shaft (11) of the actuator is driven by a motor (19) or electrical gear motor without intermediate reduction, which is fixed on the caliper casing (10) coaxially to said upstream input shaft.

14. Method for manufacturing an actuator according to any one of claims 1 to 9 or a device according to any one of claims 10 to 13, said actuator or said device comprising a cylindrical piston (16, 16b) having an internal toothing, **characterized in that** it comprises the following steps:

- providing a flat or two-dimensional metal plate made from a metal material;
- forming a toothing on at least one face of said plate by plastic deformation by stamping or embossing by means of at least one matrix having a shape complementary to said toothing, which toothing has:

  ◦ a first pattern producing a toothing having grooves parallel to one another according to a first orientation (D1), distributed along a first axis (A1L) oriented so as to uniformly surround the axis of revolution (A1) of the piston (1) once this is formed, in particular according to a first orientation parallel to said axis of revolution, and
  ◦ a second pattern producing a helical threading having one or more threads according to a second orientation (D2) crossing said first orientation (D1);

- shaping said plate (210a) by plastic bending so as to form a cylinder (210c) of revolution bearing said toothing on its internal surface (201);
- producing a two-material piston (16, 16b) having an internal space delimited by the internal surface (201) of said cylinder (201c) by flowing (99) at least one curable material around (901) the external surface (202) of the cylinder within a mold (9) surrounding said external surface, at a temperature lower than the melting point of said cylinder, thus forming an external wall (203) of said piston.

15. Method for actuating a device according to any one of claims 10 to 13, or a brake comprising an actuator according to any one of claims 1 to 9 as parking brake, **characterized in that** it comprises a command for driving the actuator by an electric motor (19) in one direction for gripping and in the other direction for releasing said parking brake.

16. Method according to the preceding claim, **characterized in that** it is applied to a device according to any one of claims 12 or 13 and comprises a command for driving the actuator by an electric motor (19) in the releasing direction over a travel sufficient to reduce a gripping force applied by the hydraulic actuation by a determined value,

   ◦ when an interruption of hydraulic actuation of the service brake is detected, thus making it possible to limit the residual braking, or
   ◦ when a command for releasing the service brake is selected by an automatic command system of the brake system.

**Fig. 1**
(art antérieur)

9PL  9NU  9SC  9R2  9R1  91  9P  9M

90  12  5  93  86  15  16  84  80  3  70  14  43  26  102  24

88  90 91  4  63  42

22  54 60  52  61  40

20  18  32  92  62  89  103  5  30  3  50  100

**Fig. 2**
(art antérieur)

90  9MGU  9AM

**Fig. 3**

R1 R2 R3 17

P1 P2 P3 162

PC1 16

S1 PC2 NU

S2 SC F1

M

**Fig. 4**

PR1 DPR PR2 DR 17

162

16

NU

SC

M

**Fig. 5**

PR1          DPR

121    151  152   161        162

12                                    DR

131    130                     141

140

M

19    10    111    139    110    D15

PR2

17

16

F1

**Fig. 6**

131   130

139

16

119   111   110        161   162   163

11                              164

120   121

12    191   140   141

192

152   151

15    193

194

**Fig. 7**

12

121

**Fig. 8**

13

139

131

131

130

**Fig. 9**

14

140

141

149

**Fig. 10**

15

151

**Fig. 11**

**Fig. 12**

**Fig. 13**

**Fig. 14**

**Fig. 15**

**Fig. 16**

**Fig. 17**

**Fig. 18**

**Fig. 19**

**Fig. 20**

L1

D1   A1L   210a   AD2   D2   A1T

**Fig. 21**

201   A1

210b   202

**Fig. 22**

208   A1

210c

**Fig. 23**

**Fig. 24**

**Fig. 25**

## RÉFÉRENCES CITÉES DANS LA DESCRIPTION

**Documents brevets cités dans la description**

- FR 1363706
- US 4804073 A

- DE 202005015404 U1